# EUROPEAN PATENT APPLICATION

(11) **EP 4 660 752 A1**
(43) Date of publication of application: **10.12.2025**
(21) Application number: 25700224.6
(22) Date of filing: 16.01.2025
(51) Int. Cl.: G06F 1/16, F16C 11/04

(54) **ELECTRONIC DEVICE COMPRISING STRUCTURE FOR PROTECTING EDGE OF FLEXIBLE DISPLAY**

(30) Priority: 19.04.2024 KR 20240053030; 04.06.2024 KR 20240073344
(71) Applicant: Samsung Electronics Co., Ltd, Suwon-si, Gyeonggi-do 16677 (KR)
(72) Inventor: KIM, Jihoon, Suwon-si, Gyeonggi-do 16677 (KR); KANG, Jeongho, Suwon-si, Gyeonggi-do 16677 (KR); KIM, Namwoo, Suwon-si, Gyeonggi-do 16677 (KR); KIM, Minho, Suwon-si, Gyeonggi-do 16677 (KR); PARK, Changi, Suwon-si, Gyeonggi-do 16677 (KR); SONG, Minsuk, Suwon-si, Gyeonggi-do 16677 (KR); AHN, Jaeuk, Suwon-si, Gyeonggi-do 16677 (KR); YOON, Yeonggyu, Suwon-si, Gyeonggi-do 16677 (KR); JUNG, Soli, Suwon-si, Gyeonggi-do 16677 (KR); CHOI, Junyoung, Suwon-si, Gyeonggi-do 16677 (KR)
(74) Representative: Appleyard Lees IP LLP
(86) International application number: PCT/KR2025/000961
(87) International publication number: WO 2025/220852

(57) **Abstract**

According to an embodiment, the multi-foldable electronic device includes a housing including a first housing, a second housing, and a third housing, a first hinge assembly rotatably connecting the first housing and the second housing, and a second hinge assembly, rotatably connecting the second housing and the third housing, having a width wider than the first hinge assembly. The multi-foldable electronic device includes a flexible display including a second portion supported by the second housing, a third portion supported by the third housing, and a second foldable portion between the second portion and the third portion, and a cover disposed on a portion of the flexible display, to prevent inflow of foreign substance from an outside. The cover includes an elastic member, and a rigid member coupled to a portion of the elastic member.

## Description

### [Technical Field]

The present disclosure relates to an electronic device including a structure for protecting a periphery of a flexible display.

### [Background Art]

As demands of users diversifies, an electronic device may include a structure in which a display for displaying content is deformable. For example, the electronic device may include a flexible display that may be folded. The electronic device may require a structure for protecting a periphery of the display in order to reduce damage to the periphery of the deformable display by an external impact.

The above-described information may be provided as a related art for the purpose of helping understanding of the present disclosure. No argument or decision is made as to whether any of the above description may be applied as a prior art related to the present disclosure.

### [Disclosure]

### [Technical Solution]

A multi-foldable electronic device is disclosed. The multi-foldable electronic device may include a housing including a first housing, a second housing, and a third housing. The multi-foldable electronic device may include a first hinge assembly rotatably connecting the first housing and the second housing. The multi-foldable electronic device may include a second hinge assembly, rotatably connecting the second housing and the third housing, having a width wider than the first hinge assembly. The multi-foldable electronic device may include a flexible display including a first portion supported by the first housing, a second portion supported by the second housing, a third portion supported by the third housing, a first foldable portion between the first portion and the second portion, and a second foldable portion between the second portion and the third portion. The multi-foldable electronic device may include a cover disposed on at least a portion of the flexible display, to prevent inflow of foreign substances from an outside. The cover may include an elastic member, and a rigid member coupled to a portion of the elastic member.

A multi-foldable electronic device is disclosed. The multi-foldable electronic device may include a housing including a first housing, a second housing, and a third housing. The multi-foldable electronic device may include a first hinge assembly rotatably connecting the first housing and the second housing. The multi-foldable electronic device may include a second hinge assembly, rotatably connecting the second housing and the third housing, having a width wider than the first hinge assembly. The multi-foldable electronic device may include a flexible display including a first portion supported by the first housing, a second portion supported by the second housing, a third portion supported by the third housing, a first foldable portion, and a second foldable portion. The multi-foldable electronic device may include an elastic member disposed on a portion of a periphery of the second portion, a portion of a periphery of the third portion, and a periphery of the second foldable portion on the second hinge assembly disposed between the first portion and the second portion. The multi-foldable electronic device may be coupled to the elastic member to be positioned on the portion of the periphery of the second portion and the portion of the periphery of the third portion, and include a rigid member having greater rigidity than the elastic member.

A multi-foldable electronic device is disclosed. The multi-foldable electronic device may include a housing including a first housing, a second housing, and a third housing. The multi-foldable electronic device may include a first hinge assembly rotatably connecting the first housing and the second housing. The multi-foldable electronic device may include a second hinge assembly, rotatably connecting the second housing and the third housing, having a width wider than the first hinge assembly. The multi-foldable electronic device may include a flexible display including a first portion supported by the first housing, a second portion supported by the second housing, a third portion supported by the third housing, a first foldable portion, at least partially deformable by the first hinge assembly, extending from the first portion to the second portion, and a second foldable portion, at least partially deformable by the second hinge assembly, extending from the second portion to the third portion. The multi-foldable electronic device may include a first elastic member disposed on at least a portion of the first portion, at least a portion of the second portion, and a periphery of the first foldable portion. The multi-foldable electronic device may include a second elastic member, disposed on at least another portion of the second portion, at least a portion of the third portion, and a periphery of the second foldable portion, having a length longer than the first elastic member. The multi-foldable electronic device may include a first protection member, coupled to the first hinge assembly, including a first protrusion positioned at least partially over the first elastic member. The multi-foldable electronic device may include a second protection member, coupled to the second hinge assembly, including a second protrusion positioned at least partially over the second elastic member and having a width greater than the first protrusion.

### [Description of the Drawings]

FIG. 1 is a block diagram of an electronic device in a network environment according to various embodiments.
FIG. 2A illustrates an exemplary electronic device in a first state.
FIG. 2B illustrates an exemplary electronic device in a second state.
FIG. 3A is a top plan view of an exemplary electronic device in a first state from which a flexible display is removed.
FIG. 3B is a rear view of an exemplary electronic device in a first state from which a rear cover and a display are removed.
FIG. 4A illustrates a portion of an electronic device in an exemplary first state.
FIG. 4B is a partial cross-sectional view of an exemplary electronic device cut along line A-A' of FIG. 4A.
FIGS. 4C and 4D illustrate a portion of an electronic device in an exemplary second state.
FIGS. 4E and 4F illustrate a portion of an electronic device in an exemplary first state.
FIG. 5A is a partially exploded perspective view of an electronic device in an exemplary first state.
FIGS. 5B and 5C illustrate a portion of an exemplary electronic device in an exemplary first state.
FIG. 5D illustrates a portion of an electronic device in an exemplary second state.
FIGS. 5E, 5F, and 5G illustrate a portion of an exemplary electronic device.
FIG. 5H illustrates an elastic member of an exemplary electronic device.
FIGS. 6A and 6B illustrate a portion of an electronic device in an exemplary first state.
FIG. 6C is a partially exploded perspective view of an electronic device in an exemplary first state.
FIG. 6D illustrates a portion of an electronic device in an exemplary first state.
FIG. 6E is a partial cross-sectional view of an electronic device in an exemplary first state cut along line B-B' of FIG. 6A.
FIG. 6F is a partial cross-sectional view of an electronic device in an exemplary first state cut along line C-C' of FIG. 6B.
FIG. 6G is a partial cross-sectional view of an electronic device in an exemplary first state cut along line D-D' of FIG. 6D.
FIG. 6H is a partial cross-sectional view of an electronic device in an exemplary first state.
FIG. 7A illustrates a portion of an electronic device in an exemplary second state.
FIG. 7B illustrates a protection member of an exemplary electronic device.
FIG. 8 illustrates a portion of an electronic device in an exemplary second state.
FIG. 9A is a side view of an electronic device in an exemplary third state.
FIG. 9B illustrates a portion of an electronic device in an exemplary second state.
FIG. 10 illustrates a portion of an exemplary electronic device.

### [Mode for Invention]

The terms used in the present disclosure are used only to describe specific embodiments and may not be intended to limit other embodiments. Singular forms may include plural referents unless the context clearly represents otherwise. The terms and words used in the present disclosure, including technical or scientific terms, may have substantially the same meanings as those generally understood by those skilled in the art. Terms that are generally defined in dictionaries may be interpreted as having substantially the same or similar meanings in the related technical field in context. However, unless otherwise defined in the present disclosure, these terms should not be interpreted in an ideal or excessively formal meanings, and even if the terms are defined in the present disclosure, they should not be interpreted as excluding examples of the present disclosure according to a certain circumstance.

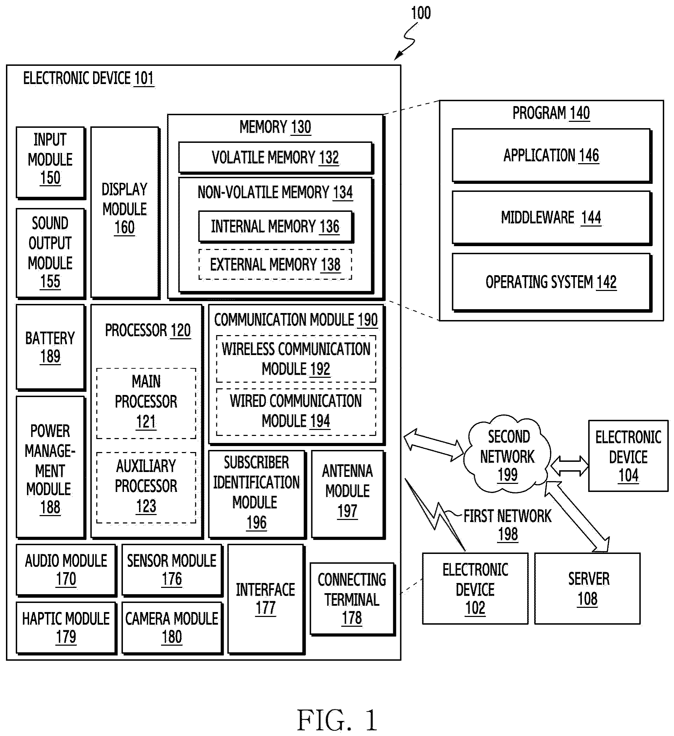

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

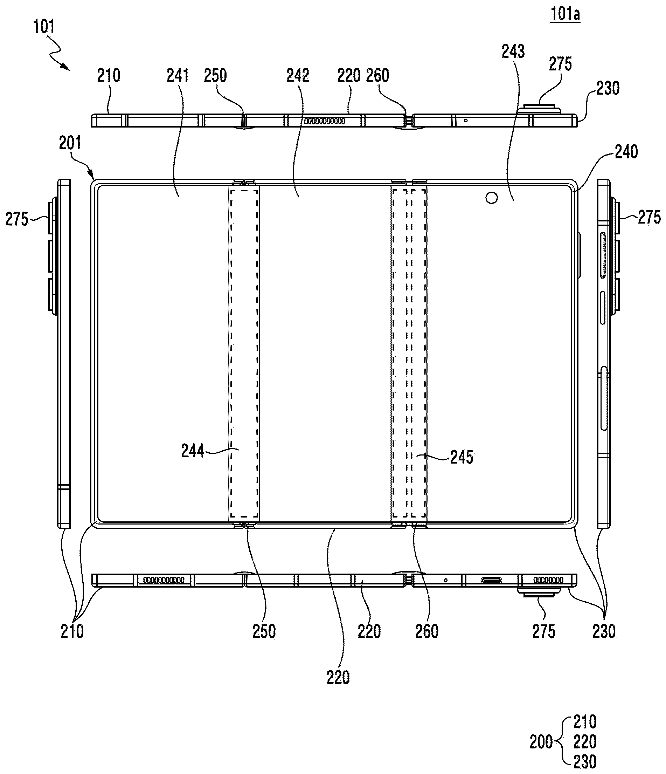

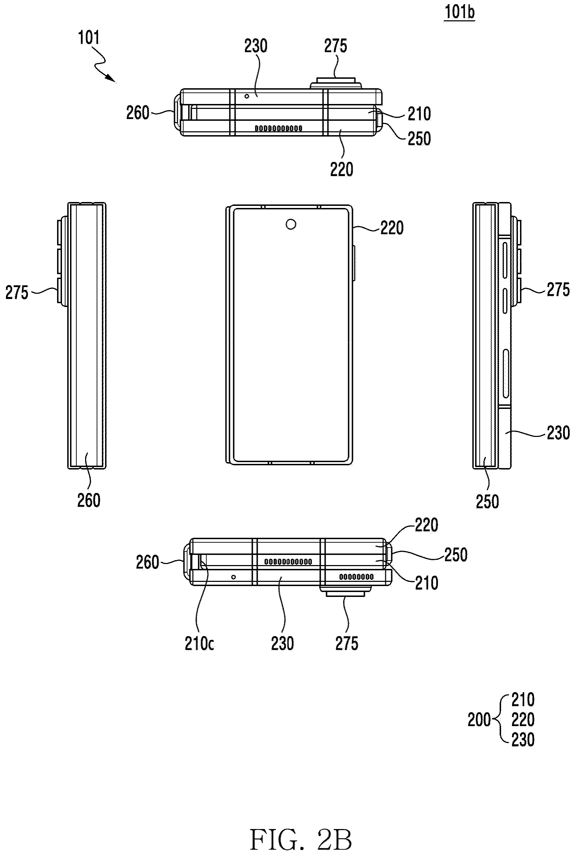

FIG. 2A illustrates an exemplary electronic device in a first state. FIG. 2B illustrates an exemplary electronic device in a second state.

Referring to FIGS. 2A and 2B, an electronic device 101 includes a housing 200, a flexible display 240, a first hinge assembly 250, and a second hinge assembly 260. The housing 200 includes a first housing part 210, a second housing part 220, and a third housing part 230. The housing 200 includes a plurality of housing parts 210, 220, and 230 and may be referred to as a foldable housing in terms of being foldable several times. The electronic device 101 may be referred to as a multi-foldable electronic device in terms of including the housing 200 and/or the flexible display 240, which are foldable several times. However, an embodiment is not limited thereto.

The first housing part 210 is rotatably coupled to the second housing part 220 by the first hinge assembly 250. The second housing part 220 and the first housing part 210 are rotatable with respect to the first hinge assembly 250. While the first housing part 210 rotates with respect to the first hinge assembly 250, the second housing part 220 rotates with respect to the first hinge assembly 250. For example, when the second housing part 220 and the first housing part 210 are rotated with respect to the first hinge assembly 250, the angular displacement of the second housing part 220 may be substantially the same as the angular displacement of the first housing part 210.

The third housing part 230 is rotatably coupled to the second housing part 220 by the second hinge assembly 260. The second housing part 220 and the third housing part 230 are rotatable with respect to the second hinge assembly 260. While the second housing part 220 rotates with respect to the second hinge assembly 260, the third housing part 230 rotates with respect to the second hinge assembly 260. For example, when the second housing part 220 and the third housing part 230 are rotated with respect to the second hinge assembly 260, the angular displacement (or angular change) of the second housing part 220 may be substantially the same as the angular displacement of the third housing part 230.

The first hinge assembly 250 and the second hinge assembly 260 are operable to change a state of the electronic device. The first hinge assembly 250 and the second hinge assembly 260 provide (or enable) a first state 101a of the electronic device 101 (or a first state 101a of the housing 200). The first state 101a of the electronic device 101 (or the first state 101a of the housing 200) may be described as an unfolded state of the electronic device 101 (or the housing 200). In the first state 101a, a front side of the first housing part 210, a front side of the second housing part 220, and a front side of the third housing part 230 define a front side of the electronic device 101. In the first state 101a, the front side of the first housing part 210, the front side of the second housing part 220, and the front side of the third housing part 230 face the same direction. In the first state 101a, the electronic device 101 provides a user with a large display area of the flexible display 240.

The first hinge assembly 250 and the second hinge assembly 260 provide a second state 101b of the electronic device 101 (or a second state 101b of the housing 200). The second state 101b of the electronic device 101 (or the second state 101b of the housing 200) may be described as a multi-folded state of the electronic device 101 (or the housing 200). In the second state 101b, the front side of the first housing part 210 and the front side of the second housing part 220 face an opposite direction each other, and the front side of the second housing part 220 and the front side of the third housing part 230 face an opposite direction each other. In the second state 101b, the front side of the first housing part 210 and the front side of the third housing part 230 face the same direction. For example, in the second state 101b, the front side of the second housing part 220 faces the front side of the first housing part 210, and the front side of the third housing part 230 faces a rear side of the first housing part 210. In the second state 101b, the electronic device 101 is folded to improve portability.

The first hinge assembly 250 and the second hinge assembly 260 provide a third state of the electronic device 101. The third state of the electronic device 101 may be described as a state (or a single folded state or a half folded state) in which the electronic device 101 is partially folded and partially unfolded. For example, in the third state, the front side of the second housing part 220 and the front side of the third housing part 230 face the same direction, and the front side of the first housing part 210 and the front side of the second housing part 220 face an opposite direction each other. For example, in the third state, the first housing part 210 and the second housing part 220 are folded, and the second housing part 220 and the third housing part 230 may be unfolded.

The flexible display 240 at least partially defines an exterior of the electronic device 101. The flexible display 240 is partially disposed within the housing 200. The flexible display 240 defines the front side of the electronic device 101. The flexible display 240 includes a first unbendable portion 241, a second unbendable portion 242, a third unbendable portion 243, a first bendable portion 244, and a second bendable portion 245. The first unbendable portion 241 of the flexible display 240 is disposed on the front side of the first housing part 210. The second unbendable portion 242 of the flexible display 240 is disposed on the front side of the second housing part 220. The third unbendable portion 243 of the flexible display 240 is disposed on the front side of the third housing part 230. The first bendable portion 244 of the flexible display 240 is disposed between the first unbendable portion 241 and the third unbendable portion 243 of the flexible display 240. For example, the first bendable portion 244 of the flexible display 240 is disposed on the first hinge assembly 250 connecting the first housing part 210 and the second housing part 220. The second bendable portion 245 of the flexible display 240 is disposed between the second unbendable portion 242 and the third unbendable portion 243 of the flexible display 240. For example, the second bendable portion 245 of the flexible display 240 are disposed on the second hinge assembly 260 connecting the second housing part 220 and the third housing part 230.

In the first state 101a, the entire display area of the flexible display 240 is visible from the front side of the housing 200. For example, the first unbendable portion 241, the second unbendable portion 242, the third unbendable portion 243, the first bendable portion 244, and the second bendable portion 245 of the flexible display 240 are visually exposed. The electronic device 101 provides a large display area including the first unbendable portion 241, the second unbendable portion 242, the third unbendable portion 243, the first bendable portion 244, and the second bendable portion 245 to the user. The display area of the flexible display 240 is not visible in the second state 101b. For example, the first unbendable portion 241, the second unbendable portion 242, the third unbendable portion 243, the first bendable portion 244, and the second bendable portion 245 of the flexible display 240 are not visually exposed. In the third state, the display area of the flexible display 240 is partially visible from the front side of the third housing part 230. For example, the third unbendable portion 243 is visually exposed, and the first unbendable portion 241 and the second unbendable portion 242 is not be visually exposed.

As an example without limitation, when the flexible display 240 is used to display a screen in the first state 101a of the electronic device 101, all portions 241, 242, 243, 244, and 245 of the flexible display 240 are activated. As an example without limitation, in the second state 101b, all portions 241, 242, 243, 244, and 245 of the flexible display 240 are deactivated. As an example without limitation, in the third state of the electronic device 101, when the flexible display 240 is used to display the screen, the third unbendable portion 243 is activated, and other portions 241, 242, 244, and 245 of the flexible display 240 are deactivated.

In the first state 101a, the first unbendable portion 241 of the flexible display 240, the second unbendable portion 242 of the flexible display 240, and the third unbendable portion 243 of the flexible display 240 face substantially the same direction. In the first state 101a, the first bendable portion 244 and the second bendable portion 245 are disposed on substantially the same horizontal plane as the first unbendable portion 241, the second unbendable portion 242, and the third unbendable portion 243.

The first hinge assembly 250 and the second hinge assembly 260 provides the second state 101b of the electronic device 101. In the second state 101b, the second unbendable portion 242 of the flexible display 240 faces the first unbendable portion 241 of the flexible display 240, and the third unbendable portion 243 of the flexible display 240 faces the rear side of the first housing part 210. In the second state 101b, the first bendable portion 244 of the flexible display 240 is folded so that the first unbendable portion 241 of the flexible display 240 and the second unbendable portion 242 of the flexible display 240 face different directions each other. In the second state 101b, the second bendable portion 245 of the flexible display 240 is folded so that the second unbendable portion 242 of the flexible display 240 and the third unbendable portion 243 of the flexible display 240 face different directions each other.

In the second state 101b, the first housing part 210 is disposed between the second housing part 220 and the third housing part 230. In the second state 101b, the second bendable portion 245 of the flexible display 240 disposed on the second hinge assembly 260 partially faces a lateral side of the first housing part 210.

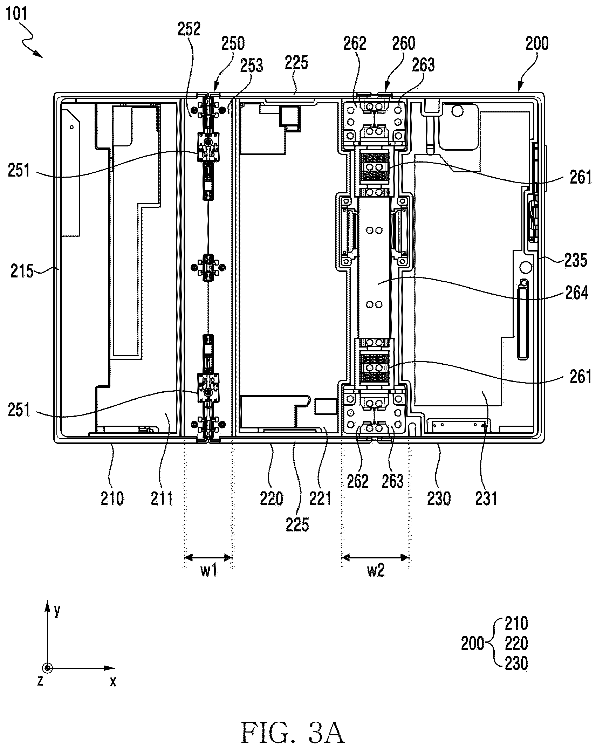

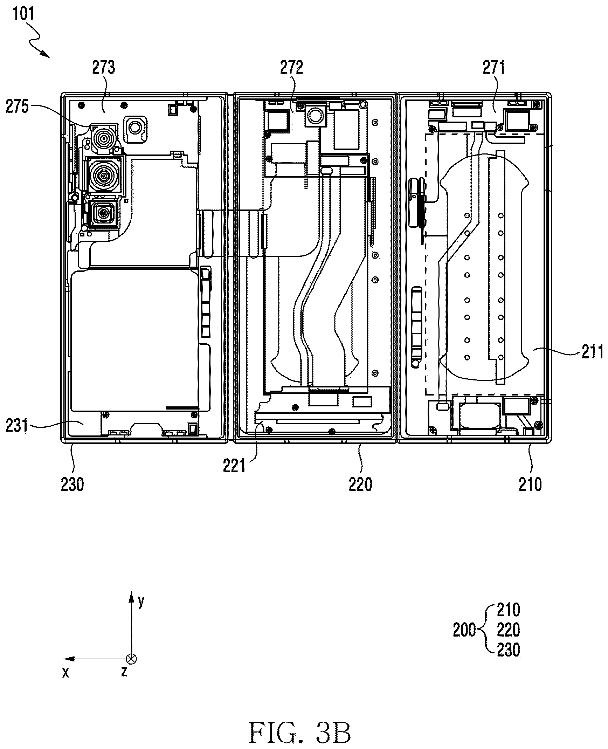

FIG. 3A is a top plan view of an exemplary electronic device in a first state from which a flexible display is removed. FIG. 3B is a rear view of an exemplary electronic device in a first state from which a rear cover and a display are removed.

Referring to FIGS. 3A and 3B, an electronic device 101 includes a first hinge assembly 250 and a second hinge assembly 260. A first width w1 of the first hinge assembly 250 is narrower than a second width w2 of the second hinge assembly 260. A difference between the first width w1 of the first hinge assembly 250 and the second width w2 of the second hinge assembly 260 is equal to or greater than a thickness of a first housing part 210. For example, the second hinge assembly 260 has the second width w2 wider than the first width w1 so that the first housing part 210 is disposed between a second housing part 220 and a third housing part 230 according to a second state 101b. The first hinge assembly 250 may be referred to as a narrow hinge structure in terms of having a narrower width than the second hinge assembly 260. The second hinge assembly 260 may be referred to as a wide hinge structure in terms of having a wider width than the first hinge assembly 250.

The first hinge assembly 250 includes a first set 251 of gears, a first hinge plate 252, and a second hinge plate 253. The first hinge plate 252 is coupled to a first support portion 211 of the first housing part 210. The second hinge plate 253 is coupled to a second support portion 221 of the second housing part 220. The gears included in the first set 251 of the gears are configured to rotate the first hinge plate 252 and the second hinge plate 253. For example, the gears included in the first set 251 of the gears rotate the second hinge plate 253 (or the second housing part 220) in conjunction with rotation of the first hinge plate 252 (or the first housing part 210). After the first hinge plate 252 (or the first housing part 210) is rotated, the gears included in the first set 251 of the gears is rotated according to the rotation of the first hinge plate 252 (or the first housing part 210). The second hinge plate 253 (or the second housing part 220) is rotated in conjunction with the rotation of the first hinge plate 252 according to the rotation of the gears included in the first set 251 of the gears.

The second hinge assembly 260 includes a second set 261 of the gears, a third hinge plate 262, a fourth hinge plate 263, and a support plate 264. The third hinge plate 262 is coupled to the second support portion 221 of the second housing part 220. The fourth hinge plate 263 is coupled to a third support portion 231 of the third housing part 230. The gears included in the second set 261 of the gears are configured to rotate the third hinge plate 262 and the fourth hinge plate 263. For example, the gears included in the second set 261 of the gears rotate the fourth hinge plate 263 (or the third housing part 230) in conjunction with the rotation of the third hinge plate 262 (or the second housing part 220). After the third hinge plate 262 (or the second housing part 220) is rotated, the gears included in the second set 261 of the gears are rotated according to the rotation of the third hinge plate 262 (or the second housing part 220). The fourth hinge plate 263 (or the third housing part 230) are rotated in conjunction with the rotation of the third hinge plate 262 according to the rotation of the gears included in the second set 261 of the gears.

The electronic device 101 includes a first printed circuit board 271, a second printed circuit board 272, and a third printed circuit board 273.

The first printed circuit board 271 is disposed in the first support portion 211 of the first housing part 210. A hardware component in the first housing part 210 is disposed in the first printed circuit board 271. The second printed circuit board 272 is disposed on the second support portion 221 of the second housing part 220. The third printed circuit board 273 is disposed in the third support portion 231 of the third housing part 230. A hardware component in the third housing part 230 is disposed in the third printed circuit board 273.

The hardware component disposed on the first printed circuit board 271 supports the hardware component disposed on the second printed circuit board 272 and/or the hardware component disposed on the third printed circuit board 273, or may independently operate.

The hardware component disposed on the second printed circuit board 272 supports the hardware component disposed on the first printed circuit board 271 or the third printed circuit board 273, or may independently operate. The hardware component disposed on the second printed circuit board 272 includes a speaker, a front camera, and/or a display driving circuit.

The hardware component disposed on the third printed circuit board 273 includes at least one processor including a processing circuit, memory including one or more storage media, a communication circuit, and a rear camera 275. The rear camera 275 is exposed through a rear structure (e.g., an opening) of the second housing part 220.

The electronic device 101 further includes batteries. Each of the batteries is attached to the support portions 211, 221, and 231 included in the housing parts 210, 220, and 230. The support portions 211, 221, and 231 support rechargeable batteries.

As an example of a disposition of hardware components, the rear camera 275 and the second printed circuit board 272 are disposed in the third housing part 230, and the third printed circuit board 273 is disposed in the second housing part 220.

The first housing part 210 and the third housing part 230 are indicated to rotate in an opposite direction with respect to the second housing part 220, but are not limited thereto. For example, while changing from a first state 101a to the second state 101b, the first housing part 210 may rotate counterclockwise with respect to the second housing part 220, and the third housing part 230 may rotate counterclockwise with respect to the second housing part 220. As the first housing part 210 and the third housing part 230 rotate in the same direction, a portion of a display area of the flexible display 240 may be visually exposed in the second state.

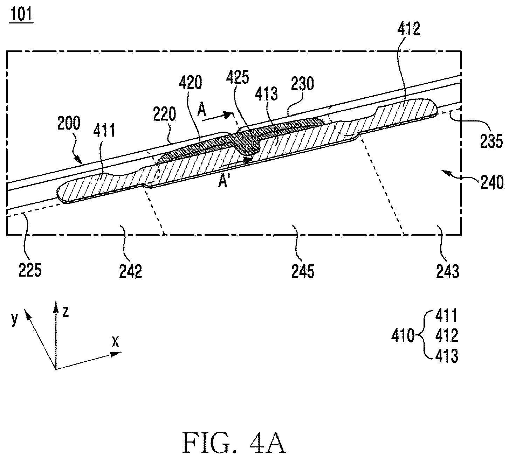

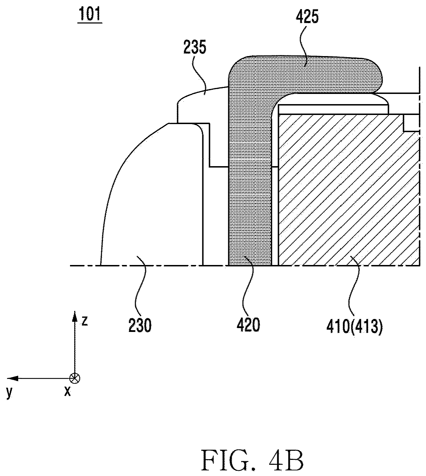

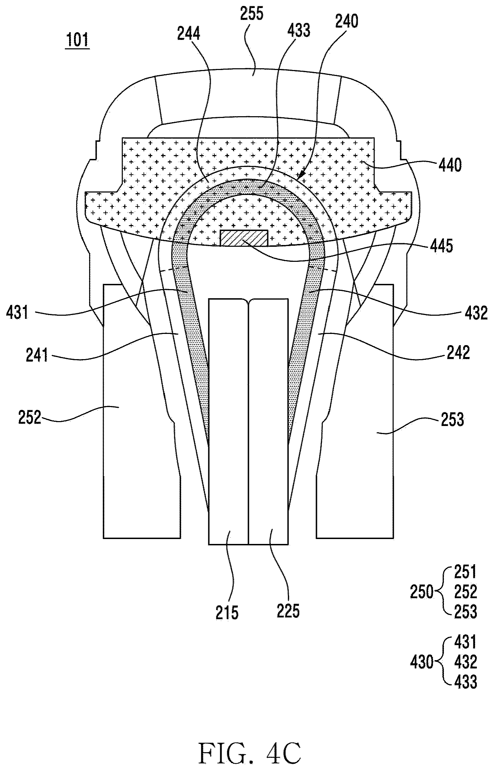

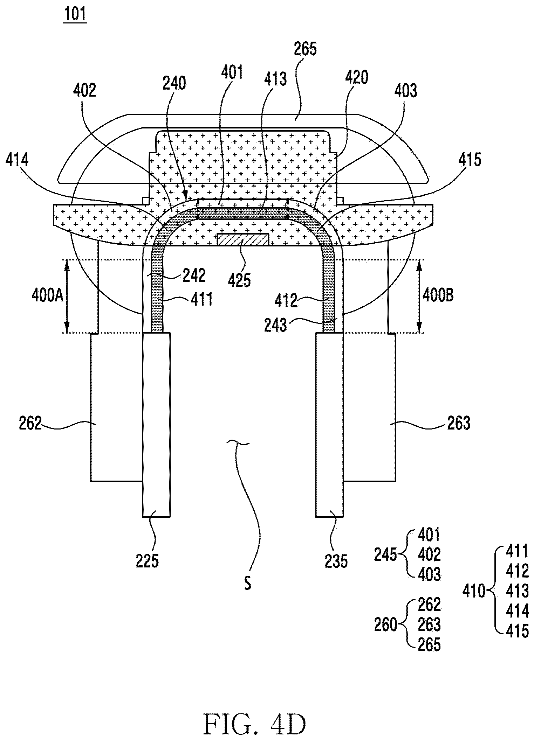

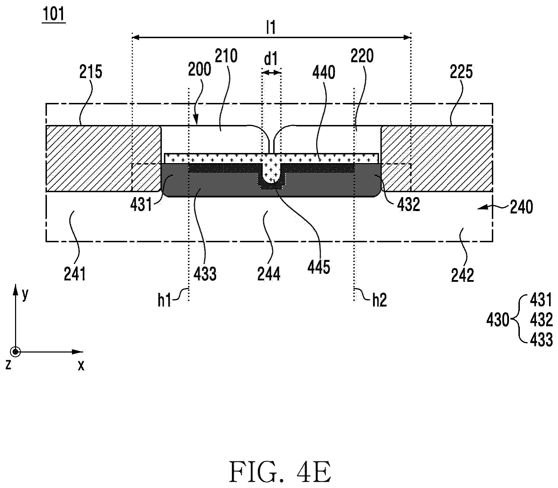

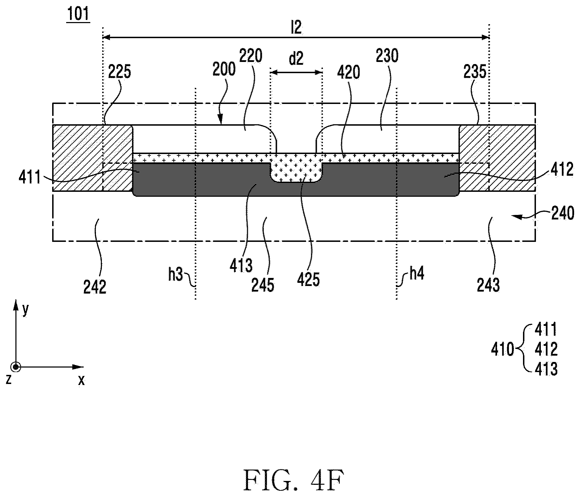

FIG. 4A illustrates a portion of an electronic device in an exemplary first state. FIG. 4B is a partial cross-sectional view of an exemplary electronic device cut along line A-A' of FIG. 4A. FIGS. 4C and 4D illustrate a portion of an electronic device in an exemplary second state. FIGS. 4E and 4F illustrate a portion of an electronic device in an exemplary first state.

Referring to FIGS. 4A, 4B, 4C, 4D, 4E, and 4F, the electronic device 101 includes a housing 200, a flexible display 240, a first hinge assembly 250, and a second hinge assembly 260. The housing 200 may include a first housing part 210, a second housing part 220, and a third housing part 230. The first hinge assembly 250 may rotatably connect the first housing part 210 and the second housing part 220. The second hinge assembly 260 rotatably connects the second housing part 220 and the third housing part 230. A width (e.g., the width w2 of FIG. 3A) of the second hinge assembly 260 is wider than a width (e.g., the width w1 of FIG. 3A) of the first hinge assembly 250.

The flexible display 240 may be referred to as a display stack or a display structure in which a plurality of layers is combined. For example, the flexible display 240 includes a cover glass, which is an upper-most layer exposed to an outside of the electronic device 101. The cover glass is at least partially deformable or may include one or more curved portions. For example, the flexible display 240 may include a polarizer attached under the cover glass, one or more adhesive layers, a display panel, and one or more supporting layers. However, an embodiment is not limited thereto, and the flexible display 240 may include a stack structure of a plurality of layers including at least partially deformable areas.

The flexible display 240 includes a first unbendable portion (e.g., the first unbendable portion 241 of FIG. 2A) supported by the first housing part 210, a second unbendable portion 242 supported by the second housing part 220, a third unbendable portion 243 supported by the third housing part 230, a first bendable portion 244 at least partially deformable by the first hinge assembly 250 and extending from the first unbendable portion 241 to the second unbendable portion 242, and a second bendable portion 245 at least partially deformable by the second hinge assembly 260 and extending from the second unbendable portion 242 to the third unbendable portion 243. When an element is referred to as an "unbendable portion" of the flexible display 240 in this document, it may mean that the element referred to as the unbendable portion is a portion of the flexible display 240 that substantially maintains a shape (e.g., a flat shape) or is not deformed, while the electronic device 101 performs a folding operation for changing a state. In addition, when an element is referred to as a "bendable portion " of the flexible display 240 in this document, it may mean that the element referred to as the bendable portion is a portion of the flexible display 240 that is curved or at least partially deformed while electronic device 101 performs the folding operation for changing the state. However, an embodiment is not limited thereto. For example, referring to FIGS. 2A and 2B together, the first unbendable portion 241 is coupled to the first housing part 210. The second unbendable portion 242 is coupled to the second housing part 220. The third unbendable portion 243 is coupled to the third housing part 230. For example, the first unbendable portion 241 is at least partially surrounded by the first housing part 210. One side of the first unbendable portion 241 is connected to the first bendable portion 244. The second unbendable portion 242 is at least partially surrounded by the second housing part 220. One side of the second unbendable portion 242 is connected to the first bendable portion 244, and another side opposite to the one side of the second unbendable portion 242 is connected to the second bendable portion 245. The third unbendable portion 243 is at least partially surrounded by the third housing part 230. One side of the third unbendable portion 243 is connected to the second bendable portion 245.

For example, at least a portion (e.g., the first hinge plate 252 of FIG. 3A) of the first hinge assembly 250 is coupled to the first housing part 210. A remaining portion (e.g., the second hinge plate 253 of FIG. 3A) of the first hinge assembly 250 is coupled to the second housing part 220. The first bendable portion 244 of the flexible display 240 extends from one side of the first unbendable portion 241, across over the first hinge assembly 250, to one side of the second unbendable portion 242. At least a portion (e.g., the third hinge plate 262 of FIG. 3A) of the second hinge assembly 260 is coupled to the second housing part 220. A remaining portion (e.g., the fourth hinge plate 263 of FIG. 3A) of the second hinge assembly 260 is coupled to the third housing part 230. The second bendable portion 245 of the flexible display 240 extends from another side opposite to the one side of the second unbendable portion 242, across over the second hinge assembly 260, to the third unbendable portion 243.

For example, the first bendable portion 244 is at least partially disposed over the first hinge assembly 250. The second bendable portion 245 is at least partially disposed over the second hinge assembly 260. For example, the first hinge assembly 250 is partially covered by the first bendable portion 244. The second hinge assembly 260 is partially covered by the second bendable portion 245. For example, since the width w1 of the first hinge assembly 250 is smaller than the width w2 of the second hinge assembly 260, a width of the first bendable portion 244 positioned over the first hinge assembly 250 may be smaller than a width of the second bendable portion 245 positioned over the second hinge assembly 260. For example, a length of the first bendable portion 244 extending from the first unbendable portion 241 to one side of the second unbendable portion 242 is smaller than a length of the second bendable portion 245 extending from another side opposite to the one side of the second unbendable portion to the third unbendable portion 243. For example, a size of an area of the first bendable portion 244 seen from the outside of the electronic device 101 in a first state (e.g., the first state 101a of FIG. 2A) that may be referred to as an unfolded state of the housing 200 is smaller than a size of an area of the second bendable portion 245 seen from the outside of the electronic device 101 in the unfolded state of the housing 200. However, embodiments supported by the present disclosure are not limited to the examples described above.

For example, the first unbendable portion 241 is rotatable with respect to the second unbendable portion 242 along with the first housing part 210 being rotated with respect to the second housing part 220 by the first hinge assembly 250. The first bendable portion 244 extending from the first unbendable portion 241 to the second unbendable portion 242 is at least partially deformed (or curved or unfolded) through the first unbendable portion 241 rotated with respect to the second unbendable portion 242 by the first hinge assembly 250. For example, the third unbendable portion 243 is rotatable with respect to the second unbendable portion 242 along the third housing part 230 rotated with respect to the second housing part 220 by the second hinge assembly 260. The second bendable portion 245 extending from the second unbendable portion 242 to the third unbendable portion 243 is at least partially deformed (or curved or unfolded) through the third unbendable portion 243 rotated with respect to the second unbendable portion 242 by the second hinge assembly 260. However, embodiments supported by the present disclosure are not limited to the examples described above, and that the rotation of one element with respect to another element is for the convenience of describing the rotation of the one element based on the other element. For example, "the first unbendable portion 241 rotated with respect to the second unbendable portion 242" may mean "the second unbendable portion 242 rotated with respect to the first unbendable portion 241". For example, "the third unbendable portion 243 rotated with respect to the second unbendable portion 242" may mean "the second unbendable portion 242 rotated with respect to the third unbendable portion 243". However, embodiments supported in the present disclosure are not limited by embodiments described above.

The housing 200 includes deco members for protecting a periphery of the flexible display 240. For example, the first housing part 210 includes a first deco member 215 disposed along a periphery of the first unbendable portion 241 of the flexible display 240. The second housing part 220 includes a second deco member 225 disposed along a periphery of the second unbendable portion 242 of the flexible display 240. The third housing part 230 includes a third deco member 235 disposed along a periphery of the third unbendable portion 243 of the flexible display 240. For example, the first deco member 215 least partially covers the periphery of the first unbendable portion 241. The second deco member 225 at least partially covers the periphery of the second unbendable portion 242. The third deco member 235 at least partially covers the periphery of the third unbendable portion 243. However, embodiments supported by the present disclosure are not limited thereto, and the housing 200 may include a plurality of deco members to protect the periphery of each of the areas 241, 242, and 243 of the flexible display 240.

In order to provide deformation of foldable areas 244 and 245 as a state of the housing 200 (or the electronic device 101) changes, the housing 200 may be required to have a structure in which the deco members 215, 225, and 235 are omitted at a position corresponding to each of the foldable areas 244 and 245. Since the deco members 215, 225, and 235 are not disposed at the position corresponding to each of the foldable areas 244 and 245, foreign substance may be introduced from the outside of the electronic device 101 through a gap between the first bendable portion 244 and the housing parts 210 and 220 or a gap between the second bendable portion 245 and the housing parts 220 and 230. A structure for providing the deformation of the foldable areas 244 and 245 and reducing inflow of the foreign substance through the foldable areas 244 and 245 will be described later.

Referring to FIGS. 4A and 4B, the electronic device 101 includes an elastic member 410 disposed on at least a portion of the second unbendable portion 242, at least a portion of the third unbendable portion 243, and the periphery of the second bendable portion 245 of the flexible display 240. For example, the elastic member 410 is disposed on the second unbendable portion 242, the third unbendable portion 243, and the second bendable portion 245 of the flexible display 240 along the periphery of the flexible display 240. For example, the elastic member 410 covers the periphery of the second bendable portion 245, a portion of the periphery of the second unbendable portion 242, and a portion of the periphery of the third unbendable portion 243. For example, a portion of the elastic member 410 (e.g., a third portion 413) may be seen from the outside of the electronic device 101 by being disposed on the second bendable portion 245. Another portion of the elastic member 410 (e.g., a portion of a first portion 411 and a portion of a second portion 412) is covered by the deco members 225 and 235 of the housing 200.

For example, the elastic member 410 includes a restorable elastic material (e.g., rubber). The elastic member 410 may be deformed along the second bendable portion 245 that is at least partially deformed by the third unbendable portion 243 that is rotated with respect to the second unbendable portion 242. For example, when referring to FIGS. 2A and 2B together, while the electronic device 101 changes from the first state 101a to a second state 101b, the elastic member 410 is least partially curved or deformed along the second bendable portion 245 that is curved. The elastic member 410 is at least partially unfolded or deformed along the second bendable portion 245 that is unfolded, while the electronic device 101 is changed from the second state 101b to the first state 101a. While the electronic device 101 is changed from the second state 101b to the first state 101a, the elastic member 410 is restored to be substantially the same as a shape of the elastic member 410 in the first state 101a before being changed to the second state 101b.

For example, the elastic member 410 includes the first portion 411 disposed on at least a portion of the second unbendable portion 242 of the flexible display 240, and the second portion 412 disposed on the third unbendable portion 243 of the flexible display 240. For example, the first portion 411 is at least partially covered by the second deco member 225 of the second housing part 220 coupled with the second unbendable portion 242. The second portion 412 is at least partially covered by the third deco member 235 of the third housing part 230 coupled to the third unbendable portion 243. For example, at least a portion of the first portion 411 is covered by the second deco member 225 by being disposed under the second deco member 225. At least a portion of the second portion 412 is covered by the third deco member 235 by being disposed under the third deco member 235. For example, by being at least partially interposed between the second deco member 225 and the second unbendable portion 242, the first portion 411 reduces the inflow of the foreign substance through a gap between the second deco member 225 and the second unbendable portion 242. By being at least partially interposed between the third deco member 235 and the third unbendable portion 243, the second portion 412 reduces the inflow of the foreign substance through a gap between the third deco member 235 and the third unbendable portion 243. However, an embodiment supported by the present disclosure is not limited thereto. By including the elastic member 410 disposed on the second bendable portion 245, the second unbendable portion 242, and the third unbendable portion 243 along the periphery of the flexible display 240, the electronic device 101 reduces the inflow of the foreign substance through a gap between the second bendable portion 245 and the housing 200 from the outside. By including the first portion 411 disposed on the second unbendable portion 242 and the second portion 412 disposed on the third unbendable portion 243, the elastic member 410 reduces the elastic member 410 from being separated from the flexible display 240 due to the deformation of the foldable area 245. However, the embodiment supported by the present disclosure is not limited thereto, and an additional elastic member (another elastic member 430 distinguished from the elastic members 410) disposed on the first bendable portion 244, and the first unbendable portion 241 and the second unbendable portion 242 around the first bendable portion 244 may be exemplarily illustrated and described through FIGS. 4C and 4E, and the electronic device 101 may include a plurality of elastic members disposed on the periphery of the foldable areas 244 and 245.

The electronic device 101 includes a protection member 420 including a protrusion 425 for guiding the deformation of the second bendable portion 245 so that the second bendable portion 245 that is deformed as the state of the electronic device 101 (or the housing 200) is changed is deformed into a designated shape. For example, the protection member 420 is coupled to the second hinge assembly 260 disposed under the second bendable portion 245. At least a portion of the protection member 420 may be seen from the outside of the electronic device 101 by being disposed along the periphery of the second bendable portion 245. For example, the protection member 420 faces a lateral side of the second bendable portion 245. The protection member 420 is disposed substantially parallel to the lateral side of the second bendable portion 245 in the unfolded state (e.g., the first state 101a of FIG. 2A) of the electronic device 101. For example, the protrusion 425 of the protection member 420 is disposed over the second bendable portion 245. The protrusion 425 is disposed, for example, on the third portion 413 of the elastic member 410 disposed on the second bendable portion 245. For example, the protrusion 425 partially covers the third portion 413 of the elastic member 410 disposed on the second bendable portion 245.

For example, when referring to FIGS. 2A and 2B together, the second bendable portion 245 is at least partially curved, while the electronic device 101 is changed from the first state 101a to the second state 101b. The protrusion 425 of the protection member 420 guides the elastic member 410 (or the third portion 413 of the elastic member 410) and/or the second bendable portion 245 so that the elastic member 410 and/or the second bendable portion 245 under the protrusion 425 are changed to the designated shape (e.g., to be changed from a planar shape to a U shape). For example, the protrusion 425 of the protection member 420 guides the deformation of the elastic member 410 and the second bendable portion 245 while the state of the electronic device 101 is changed, by pressing the elastic member 410 and the second bendable portion 245 under the protrusion 425 downward (e.g., in a -z direction). For example, the protrusion 425 of the protection member 420 guides the deformation of the second bendable portion 245 and/or the elastic member 410 by reducing an irregular shape change (e.g., protruding deformation) of the elastic member 410 according to the deformation of the second bendable portion 245 while the state of the electronic device 101 is changed. By including the protection member 420 including the protrusion 425 and disposed along the periphery of the second bendable portion 245, the electronic device 101 reduces damage to the second bendable portion 245 by an external impact and may guide the deformation of the second bendable portion 245 and the elastic member 410. However, an embodiment supported by the present disclosure is not limited thereto, and an additional protection member (another protection member 440 distinguished from the protection member 420) disposed on the first bendable portion 244 may be exemplarily illustrated and described through FIGS. 4C and 4E, and the electronic device 101 may include a plurality of protection members disposed along the periphery of the foldable areas 244 and 245.

Referring to FIGS. 4C, 4D, 4E, and 4F, the electronic device 101 includes the periphery of the first bendable portion 244 that is at least partially curved by the first hinge assembly 250, a portion of the first unbendable portion 241 connected to one side of the first bendable portion 244, and another elastic member 430 disposed on at least a portion of the second unbendable portion 242 connected to another side opposite to the one side of the first bendable portion 244. A length 12 of the elastic member 410 disposed on the second bendable portion 245 is longer than a length 11 of the other elastic member 430 disposed on the first bendable portion 244. For example, since the width (e.g., the width w2 of FIG. 3A) of the second hinge assembly 260 configured to deform the second bendable portion 245 is greater than the width (e.g., the width w1 of FIG. 3A) of the first hinge assembly 250 configured to deform the first bendable portion 244, the width (or area) of the second bendable portion 245 is greater than the width (or area) of the first bendable portion 244. Since the width of the second bendable portion 245 is greater than the width of the first bendable portion 244, the length 12 of the elastic member 410 disposed on the periphery of the second bendable portion 245 is longer than the length 11 of the other elastic member 430 disposed on the first bendable portion 244.

For example, in order to provide the deformation to the foldable areas 244 and 245 as the state of the electronic device 101 changes, the deco members 215, 225, and 235 may be omitted at the position corresponding to each of the foldable areas 244 and 245. The periphery of the first bendable portion 244 in which the first deco member 215 and the second deco member 225 are not disposed is shorter than the periphery of the second bendable portion 245 in which the second deco member 225 and the third deco member 235 are not disposed. The length of the other elastic member 430 for preventing or reducing the foreign substance introduced through the gap between the housing 200 including the deco members 215, 225, and 235 and the first bendable portion 244 is shorter than the length of the elastic member 410 for preventing or reducing the foreign substance introduced through the gap between the housing 200 and the second bendable portion 245. However, an embodiment supported by the present disclosure is not limited thereto.

The electronic device 101 includes another protection member 440 including another protrusion 445 disposed along the periphery of the first bendable portion 244 and disposed over the first bendable portion 244. A width d1 of the other protrusion 445 is smaller than a width d2 of the protrusion 425 of the protection member 420 disposed along the periphery of the second bendable portion 245. For example, the protection member 420 is coupled to a second hinge cover 265 of the second hinge assembly 260. The other protection member 440 is coupled to a first hinge cover 255 of the first hinge assembly 250. For example, since the width of the second bendable portion 245 is wider than the width of the first bendable portion 244, the protrusion 425 of the protection member 420 positioned over the second bendable portion 245 to guide the deformation of the second bendable portion 245 has a width greater than the other protrusion 445 of the other protection member 440 positioned over the first bendable portion 244 to guide the deformation of the first bendable portion 244. For example, in order to provide the deformation to the foldable areas 244 and 245 as the state of the electronic device 101 changes, the deco members 215, 225, and 235 are omitted at the position corresponding to each of the foldable areas 244 and 245. The periphery of the first bendable portion 244 in which the first deco member 215 and the second deco member 225 are not disposed is shorter than the periphery of the second bendable portion 245 in which the second deco member 225 and the third deco member 235 are not disposed. The width of the other protection member 440 disposed between the first deco member 215 and the second deco member 225 is smaller than the width of the protection member 420 disposed between the second deco member 225 and the third deco member 235. However, an embodiment supported by the present disclosure is not limited thereto.

Referring to FIGS. 4C and 4D, the second bendable portion 245 of the flexible display 240 includes a plane portion 401 having a substantially perpendicular and flat shape with respect to the second unbendable portion 242 and the third unbendable portion 243 of the flexible display 240 in a multi-folded state (e.g., the second state 101b of FIG. 2A) of the electronic device (or the housing 200), a first deformation portion 402 that is curved by the second hinge assembly 260 and extends from the plane portion 401 to the second unbendable portion 242, and a second deformation portion 403 that is curved by the second hinge assembly 260 and extends from the plane portion 401 to the third unbendable portion 243.

The third portion 413 of the elastic member 410 are disposed on the plane portion 401 of the second bendable portion 245. The elastic member 410 includes a first connecting portion 414 connecting the first portion 411 and the third portion 413 disposed on the second unbendable portion 242, and a second connecting portion 415 connecting the second portion 412 and the third portion 413 disposed on the third unbendable portion 243. The first connecting portion 414 is disposed on the first deformation portion 402 of the second bendable portion 245. The second connecting portion 415 is disposed on the second deformation portion 403 of the second bendable portion 245.

For example, the first portion 411, the second portion 412, and the third portion 413 of the elastic member 410 are portions that substantially maintain a planar shape while the state of the electronic device 101 is changed. The first connecting portion 414 and the second connecting portion 415 of the elastic member 410 are portions configured to be deformed while the state of the electronic device 101 is changed. For example, the connecting portions 414 and 415 of the elastic member 410 are portions that are curved while the state of the electronic device 101 is changed from the first state (e.g., the first state 101a of FIG. 2A) to the second state (e.g., the second state 101b of FIG. 2A) or are unfolded while the electronic device 101 is changed from the second state to the first state. For example, the connecting portions 414 and 415 of the elastic member 410 are portions configured to form a curved surface by being extended or contracted while the third hinge plate 262 and the fourth hinge plate 263 of the second hinge assembly 260 are rotated with respect to the second hinge cover 265. By including the connecting portions 414 and 415, the elastic member 410 guides the second bendable portion 245 to be deformed while the state of the electronic device 101 is changed and reduces the inflow of the foreign substance through the gap between the second bendable portion 245 and the housing 200.

For example, the other elastic member 430 includes a fourth portion 431 disposed on the first unbendable portion 241, a fifth portion 432 disposed on the second unbendable portion 242, and a third connecting portion 433 extending from the fourth portion 431 to the fifth portion 432 and disposed on the first bendable portion 244. For example, the fourth portion 431 and the fifth portion 432 of the other elastic member 430 are portions that substantially maintain the planar shape while the state of the electronic device 101 is changed. The third connecting portion 433 of the other elastic member 430 is a portion configured to be deformed while the state of the electronic device 101 is changed. For example, the third connecting portion 433 of the other elastic member 430 is a portion that is curved while the state of the electronic device 101 is changed from the first state (e.g., the first state 101a of FIG. 2A) to the second state (e.g., the second state 101b of FIG. 2A) or is unfolded while the electronic device 101 is changed from the second state to the first state. For example, the third connecting portion 433 of the other elastic member 430 is a portion configured to form a curved surface by being extended or contracted while the first hinge plate 252 and the second hinge plate 253 of the first hinge assembly 250 are rotated with respect to the first hinge cover 255. By including the third connecting portion 433, the other elastic member 430 guides the first bendable portion 244 to be deformed while the state of the electronic device 101 is changed and reduces the inflow of the foreign substance through the gap between the first bendable portion 244 and the housing 200.

Referring to FIGS. 4E and 4F, when the flexible display 240 is viewed from above (e.g., when viewed in the z direction), the electronic device 101 includes a plurality of boundary axes h1, h2, h3, and h4. For example, a first boundary axis h1 is an axis corresponding to a boundary between the first unbendable portion 241 and the first bendable portion 244 when the flexible display 240 is viewed from above. The first boundary axis h1 is, for example, the boundary where the curved first bendable portion 244 and the first unbendable portion 241 meet in the second state (e.g., the second state 101b of FIG. 2B) of the electronic device 101. The second boundary axis h2 is an axis corresponding to a boundary between the first bendable portion 244 and the second unbendable portion 242 when the flexible display 240 is viewed from above. For example, the second boundary axis h2 is the boundary where the curved first bendable portion 244 and the second unbendable portion 242 meet in the second state 101b of the electronic device 101. For example, when the flexible display 240 is viewed from above, the first bendable portion 244 is deformed between the first boundary axis h1 and the second boundary axis h2 while the state of the electronic device 101 is changed. For example, the third boundary axis h3 is an axis corresponding to a boundary between the second unbendable portion 242 and the second bendable portion 245 when the flexible display 240 is viewed from above. For example, the third boundary axis h3 is the boundary where the curved second bendable portion 245 and the second unbendable portion 242 meet in the second state 101b of the electronic device 101. The fourth boundary axis h4 is an axis corresponding to a boundary between the second bendable portion 245 and the third unbendable portion 243 when the flexible display 240 is viewed from above. For example, the fourth boundary axis h4 is the boundary where the curved second bendable portion 245 and the third unbendable portion 243 meet in the second state 101b of the electronic device 101. For example, when the flexible display 240 is viewed from above, the second bendable portion 245 is deformed between the third boundary axis h3 and the fourth boundary axis h4 while the state of the electronic device 101 is changed. For example, a distance between the third boundary axis h3 and the fourth boundary axis h4 is greater than a distance between the first boundary axis h1 and the second boundary axis h2.

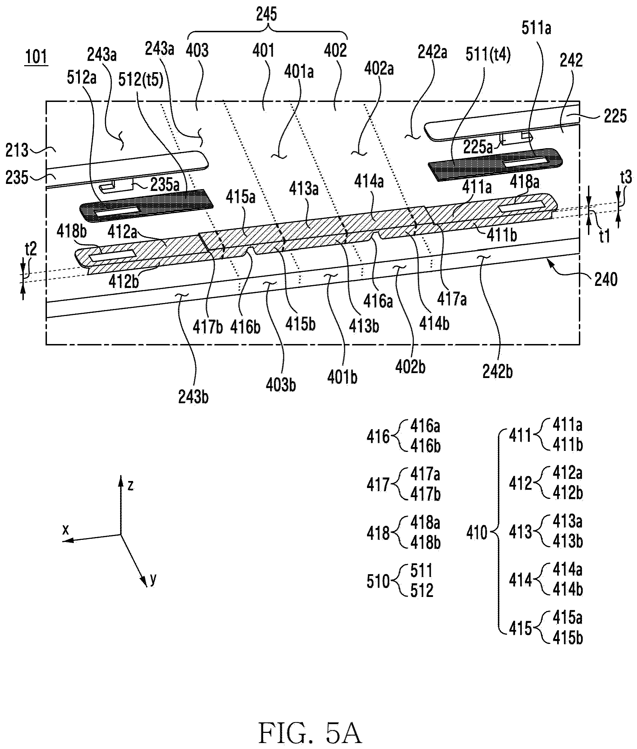

Referring back to FIG. 4D, unlike the first bendable portion 244 in FIG. 4C, the second bendable portion 245 includes the plane portion 401 or may have a width greater than the first bendable portion 244 to form a space S for accommodating the first housing part 210 in the second state (e.g., the second state 101b of FIG. 2B, and the multi-folded state) of the electronic device 101. Referring to FIGS. 4E and 4F together, since the length l2 of the elastic member 410 disposed on the second bendable portion 245 is longer than the length 11 of the other elastic member 430 disposed on the first bendable portion 244, an area (or a length of the periphery of the flexible display 240 covered by the elastic member 410) of the elastic member 410 exposed to the external impact of the electronic device 101 is greater than an area (or a length of the periphery of the flexible display 240 covered by the other elastic member 430) of the other elastic member 430 exposed to the external impact. For example, since the width of the second bendable portion 245 is greater than the width of the first bendable portion 244, flat areas 400A and 400B of the flexible display 240 under the elastic member 410 exposed from the deco members 225 and 235 may be damaged by the external impact of the electronic device 101 and/or the change in the state of the electronic device 101. For example, the third portion 413 of the elastic member 410 attached on the plane portion 401 of the second bendable portion 245 may not sufficiently protect the plane portion 401 from the external impact of the electronic device 101 or may cause damage to the plane portion 401 due to the deformation of the first deformation portion 402 and the second deformation portion 403. The electronic device 101 may require a structure to protect flat areas (e.g., the area 400A, the area 400B, and the plane portion 401) of the flexible display 240 disposed over the second hinge assembly 260. The structure will be described through the illustration of FIG. 5A and below.

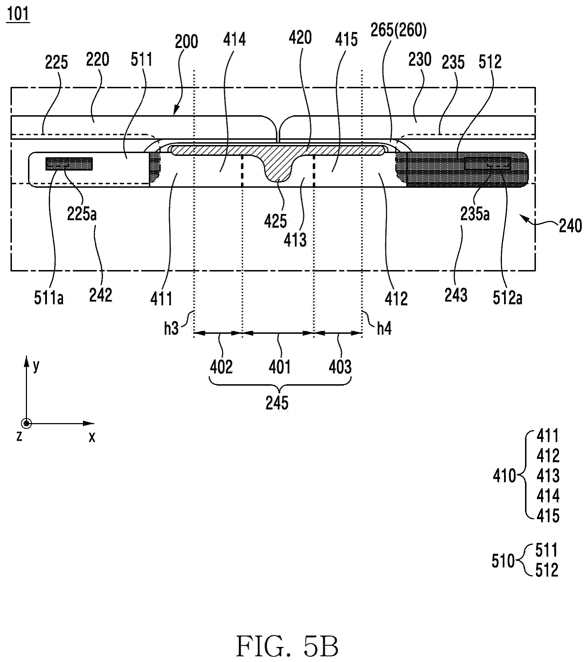

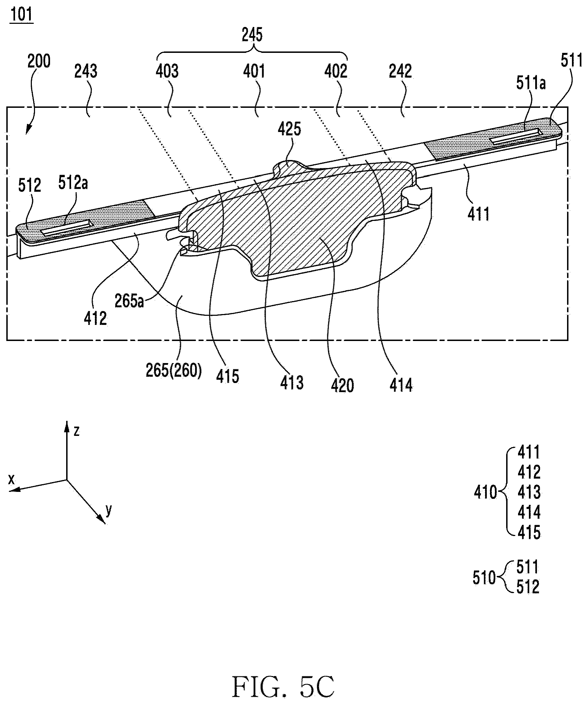

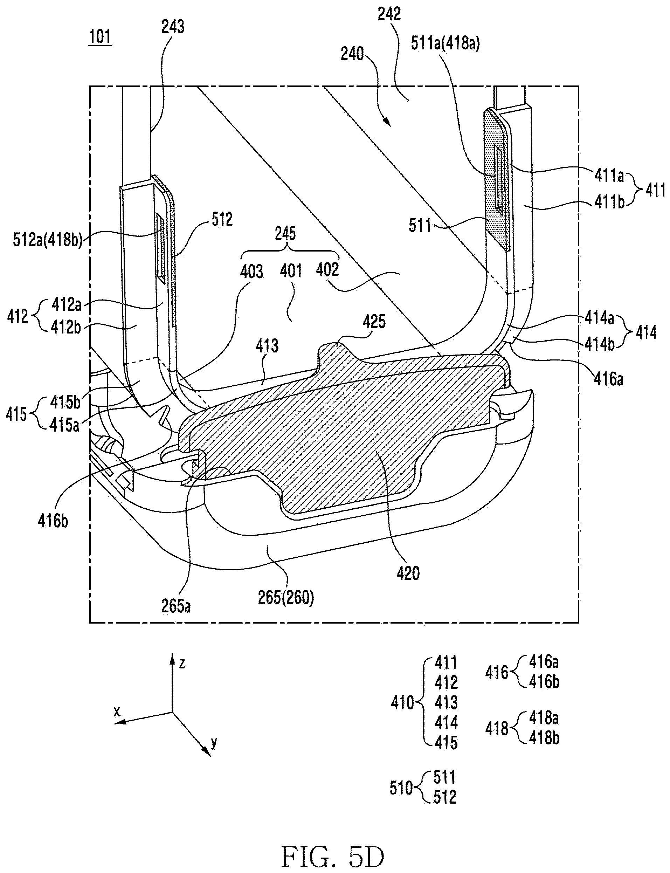

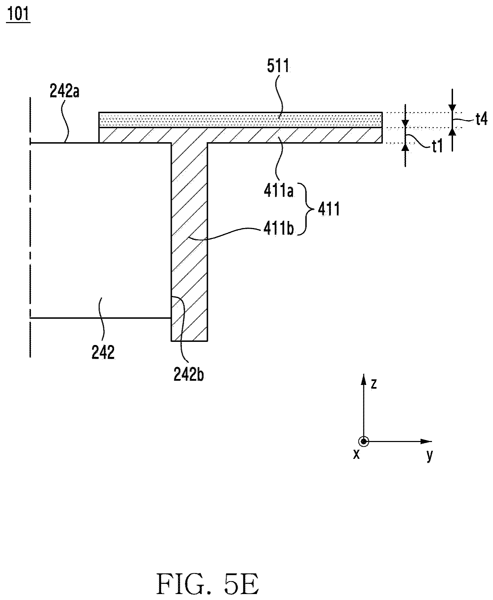

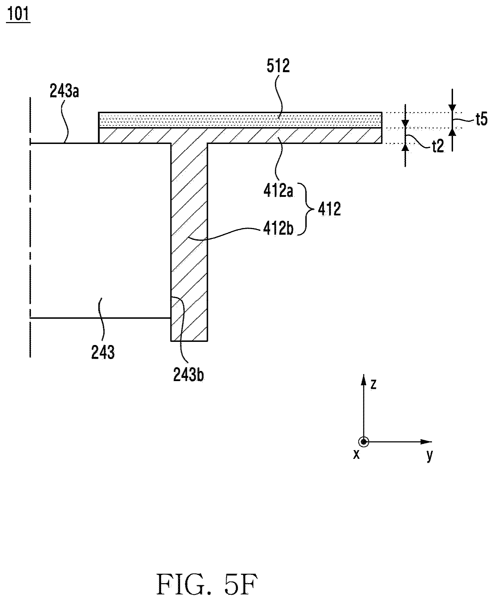

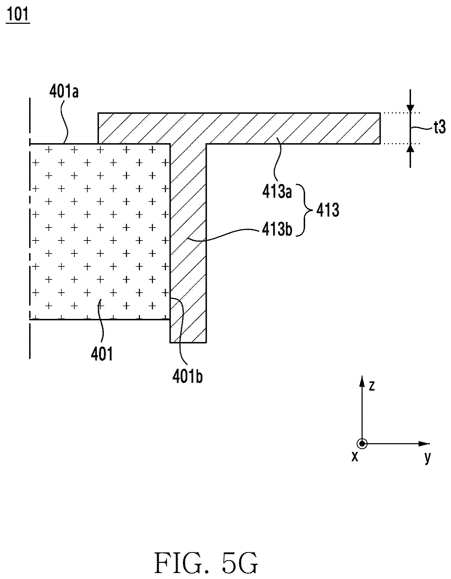

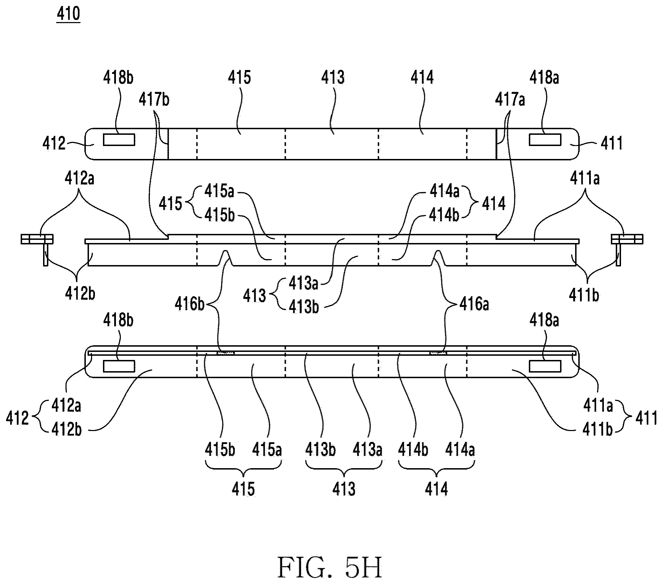

FIG. 5A is a partially exploded perspective view of an electronic device in an exemplary first state. FIGS. 5B and 5C illustrate a portion of an exemplary electronic device in an exemplary first state. FIG. 5D illustrates a portion of an electronic device in an exemplary second state. FIGS. 5E, 5F, and 5G illustrate a portion of an exemplary electronic device. FIG. 5H illustrates an elastic member of an exemplary electronic device.

Referring to FIGS. 5A, 5B, 5C, 5D, 5E, 5F, and 5G, an electronic device 101 includes a housing 200 including a first housing part (e.g., the first housing part 210 of FIG. 2A), a second housing part 220, and a third housing part 230. The electronic device 101 includes a first hinge assembly (e.g., the first hinge assembly 250 of FIG. 2A) rotatably connecting the first housing part 210 and the second housing part 220, and a second hinge assembly 260 rotatably connecting the second housing part 220 and the third housing part 230, having a width (e.g., the width w2 of FIG. 3A) wider than the first hinge assembly 250. The electronic device 101 includes a flexible display 240 including a first unbendable portion (e.g., the first unbendable portion 241 of FIG. 2A) supported by the first housing part 210, a second unbendable portion 242 supported by the second housing part 220, a third unbendable portion 243 supported by the third housing part 230, a first bendable portion (e.g., the first bendable portion 244 of FIG. 2A), at least partially deformable by the first hinge assembly 250, extending from the first unbendable portion 241 to the second unbendable portion 242, and a second bendable portion 245, at least partially deformable by the second hinge assembly 260, extending from the second unbendable portion 242 to the third unbendable portion 243. The electronic device 101 includes an elastic member 410 disposed on at least a portion of the second unbendable portion 242, at least a portion of the third unbendable portion 243, and a periphery of the second bendable portion 245. However, it is not limited thereto, and the electronic device 101 illustrated and described in FIGS. 5A to 5D may include configurations (e.g., the other elastic member 430 and the other protection member 440) illustrated and described in FIGS. 4A to 4F. Hereinafter, a description of overlapping configuration having the same reference numeral as that described in FIGS. 4A to 4F will be omitted.

A protection member 420 engages with the second hinge cover 265 of the second hinge assembly 260. For example, the protection member 420 is seated in a seating groove 265a of the second hinge cover 265 formed along the periphery of the second bendable portion 245. A protrusion 425 of the protection member 420 is disposed at least partially over a plane portion 401 of the second bendable portion 245. For example, the protrusion 425 is disposed over the third portion 413 disposed on the plane portion 401 of the elastic member 410. By being positioned at least partially over the plane portion 401, as deformation portions 402 and 403 of the second bendable portion 245 are deformed, the protrusion 425 are configured to reduce the plane portion 401 and/or the third portion 413 from being separated from the second hinge assembly 260 and guide deformation of the deformation portions 402 and 403.

The electronic device 101 includes at least one rigid member 510 coupled to the elastic member 410. The at least one rigid member 510 includes a first rigid member 511 coupled to a first portion 411 of the elastic member 410 attached to at least a portion of the second unbendable portion 242. The at least one rigid member 510 includes a second rigid member 512 attached on a second portion 412 of the elastic member 410 coupled to at least a portion of the third unbendable portion 243. For example, rigidity of the at least one rigid member 510 is greater than rigidity of the elastic member 410. A property of material forming the at least one rigid member 510 is different from a property of material forming the elastic member 410. For example, the at least one rigid member 510 includes material having relatively high rigidity with respect to the elastic member 410. For example, the at least one rigid member 510 may include a metal; a polymer sheet including polyethylene terephthalate (PET), or polycarbonate (PC); coating material including acryl or polyurethane; and rubber and/or silicone with hardness relatively higher than the elastic member 410, but an embodiment is not limited thereto.

For example, the elastic member 410 and at least one rigid member 510 coupled to the elastic member 410 may be referred to as a cover for protecting the periphery of the flexible display 240. The cover may be deformed according to the deformation of the second bendable portion 245 through an elastic force and/or a restoring force of the elastic member 410. Through the at least one rigid member 510 coupled to the elastic member 410, the cover guides the deformation of the second unbendable portion 245. Through the at least one rigid member 510 coupled to the elastic member 410, the cover protects the second bendable portion 245 and the periphery of the second unbendable portion 242 and the third unbendable portion 243 of the flexible display 240 connected to the second bendable portion 245 from an external impact. The cover may be referred to as a dust cover to prevent inflow of foreign substance from an outside, but an embodiment supported by the present disclosure is not limited thereto.

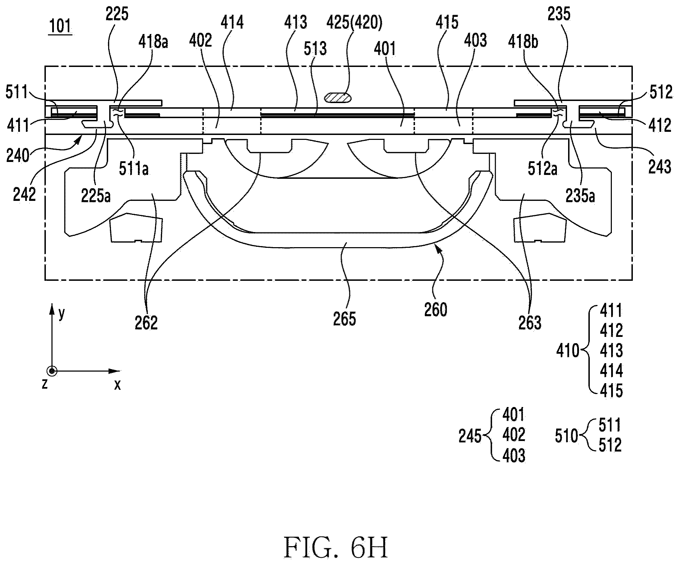

Referring to FIG. 6H together, the at least one rigid member 510 includes the first rigid member 511 attached under the first portion 411 of the elastic member 410 attached to at least a portion of the second unbendable portion 242. The at least one rigid member 510 includes the second rigid member 512 attached under the second portion 412 of the elastic member 410 attached to at least a portion of the third unbendable portion 243.

For example, the first rigid member 511 is disposed over the second unbendable portion 242 of the flexible display 240 by being attached on the first portion 411 of the elastic member 410. The first rigid member 511 is disposed along the periphery of the second unbendable portion 242. For example, the first rigid member 511 is positioned at least partially between the second unbendable portion 242 and a second deco member 225. The first rigid member 511 is disposed between the first portion 411 of the elastic member 410 and the second deco member 225. For example, the first rigid member 511 is covered by the second deco member 225. For example, the second rigid member 512 is disposed over the third unbendable portion 243 of the flexible display 240 by being attached on the second portion 412 of the elastic member 410. The second rigid member 512 is disposed along the periphery of the third unbendable portion 243. For example, the second rigid member 512 is positioned at least partially between the third unbendable portion 243 and a third deco member 235. The second rigid member 512 is disposed between the second portion 412 of the elastic member 410 and the third deco member 235. For example, the second rigid member 512 is covered by the third deco member 235. However, embodiments supported by the present disclosure are not limited thereto, and at least one rigid member 510 may include one or more rigid members attached to at least one of the first portion 411 and the second portion 412 of the elastic member 410. By including at least one rigid member 510 attached on the elastic member 410, while a state of the electronic device 101 (or the housing 200) is changed, the electronic device 101 guides the deformation of the second bendable portion 245 and reduces damage to the second unbendable portion 242 and/or the third unbendable portion 243 connected to the second bendable portion 245 by the deformation of the second bendable portion 245.

Referring to FIGS. 5A, 5E, 5F, and 5G, a thickness t3 of the third portion 413 of the elastic member 410 is greater than a thickness t1 of the first portion 411 of the elastic member 410 and a thickness t2 of the second portion 412 of the elastic member 410. For example, the thickness t3 of the third portion 413 (or a third horizontal portion 413a) disposed on a front side 401a of the plane portion 401 of the second bendable portion 245 is greater than the thickness t1 of the first portion 411 (or a first horizontal portion 411a) disposed on a front side 242a of the second unbendable portion 242 of the flexible display 240. For example, the thickness t3 of the third portion 413 (or the third horizontal portion 413a) disposed on the front side 401a of the plane portion 401 of the second bendable portion 245 is greater than the thickness t2 of the second portion 412 (or a second horizontal portion 412a) disposed on a front side 243a of the third unbendable portion 243 of the flexible display 240.

For example, the elastic member 410 includes at least one step structure 417 to provide a space for at least one rigid member 510 to be attached. For example, the first portion 411 of the elastic member 410 includes a first step structure 417a to form a seating portion for attaching the first rigid member 511. The second portion 412 of the elastic member 410 includes a second step structure 417b to form a seating portion for attaching the second rigid member 512. By the step structures 417a and 417b, the thickness t1 of the first portion 411 and the thickness t2 of the second portion 412 are smaller than the thickness t3 of the third portion 413 attached to the plane portion 401.

Referring to FIGS. 5A, 5E, 5F, and 5G, the thickness t3 of the third portion 413 of the elastic member 410 is greater than a thickness t4 of the first rigid member 511 and a thickness t5 of the second rigid member 512. For example, at least one rigid member 510 is attached on the elastic member 410 in a thin film to provide the deformation of the first deformation portion 402 and the second deformation portion 403 of the second bendable portion 245, while the state of the electronic device 101 (or the housing 200) is changed. The thickness t3 of the third portion 413 of the elastic member 410 disposed on the plane portion 401 is greater than the thickness t4 of the first rigid member 511 disposed on the first portion 411. The thickness t3 of the third portion 413 is greater than the thickness t5 of the second rigid member 512 disposed on the second portion 412. For example, the thickness t4 of the first rigid member 511 and the thickness t5 of the second rigid member 512 are substantially the same, but are not limited thereto.

For example, the sum of the thickness t4 of the first rigid member 511 and the thickness t1 of the first portion 411 corresponds to the thickness t3 of the third portion 413. A height of the first step structure 417a of the first portion 411 configured to form the seating portion for the first rigid member 511 corresponds to the thickness t4 of the first rigid member 511. For example, the sum of the thickness t5 of the second rigid member 512 and the thickness t2 of the second portion 412 corresponds to the thickness t3 of the third portion 413. A height of the second step structure 417b of the second portion 412 configured to form the seating portion for the second rigid member 512 corresponds to the thickness t5 of the second rigid member 512. For example, the first rigid member 511, the second rigid member 512, the third portion 413, a first connecting portion 414, and a second connecting portion 415 form a continuous surface, but are not limited thereto.

At least one rigid member 510 is attached to the elastic member 410 through adhesive material or double injection. For example, at least one rigid member 510 is attached through the adhesive material (e.g., an adhesive or an adhesive tape) on at least one seating portion formed by at least one step structure 417 of the elastic member 410. For example, at least one rigid member 510 is integrally formed with the elastic member 410 through a double injection process. However, an embodiment is not limited thereto.

The first rigid member 511 includes a first opening 511a elongated along the periphery of the second unbendable portion 242 of the flexible display 240. The second rigid member 512 includes a second opening 512a elongated along the periphery of the third unbendable portion 243 of the flexible display 240. The second deco member 225 covering the periphery of the second unbendable portion 242 with the elastic member 410 is coupled to the first opening 511a. The third deco member 235 covering the periphery of the third unbendable portion 243 with the elastic member 410 is coupled to the second opening 512a.

The second decoration member 225 includes a first engagement structure 225a (or a hook structure) for engaging with the first opening 511a of the first rigid member 511. The third deco member 235 includes a second engagement structure 235a (or hook structure) for engaging with the second opening 512a of the second rigid member 512. For example, by being positioned at least partially in the first opening 511a, the first engagement structure 225a allows the second deco member 225 to be slidably coupled to the first rigid member 511 (or the first portion 411 of the elastic member 410). By being positioned at least partially in the second opening 512a, the second engagement structure 235a allows the third deco member 235 to be slidably coupled to the second rigid member 512 (or the second portion 412 of the elastic member 410). However, an embodiment is not limited thereto.

For example, the elastic member 410 includes at least one other opening 418 formed at a position corresponding to the openings 511a and 512a of the rigid members 511 and 512. For example, the first portion 411 of the elastic member 410 includes a third opening 418a overlapping the first opening 511a of the first rigid member 511 and connecting to the first opening 511a. For example, the second portion 412 of the elastic member 410 includes a fourth opening 418b overlapping the second opening 512a of the second rigid member 512 and connecting to the second opening 512a. However, an embodiment is not limited thereto.

For example, at least one rigid member 510 is slidably coupled to the deco members 225 and 235 through the openings 511a and 512a. For example, as the state of the electronic device 101 (or the housing 200) is changed, the connecting portions 414 and 415 of the elastic member 410 attached to the deformation portions 402 and 403 of the second bendable portion 245 may be deformed. As the first connecting portion 414 is deformed, the first portion 411 connected to the first connecting portion 414 is slid with respect to the second deco member 225. As the second connecting portion 415 is deformed, the second portion 412 connected to the second connecting portion 415 is slid with respect to the third deco member 235. The first rigid member 511 disposed on the first portion 411 provides flexibility of the first connecting portion 414, by including the first opening 511a slidable with respect to the second deco member 225. The second rigid member 512 disposed on the second portion 412 may provide flexibility of the second connecting portion 415 by including the second opening 512a slidable with respect to the third deco member 235.

The elastic member 410 includes one or more slits 416 for guiding the deformation of the elastic member 410 according to the deformation of the second bendable portion 245. For example, one or more slits 416 are formed in the connecting portions 414 and 415 of the elastic member 410, which are deformed with the second bendable portion 245 as the second bendable portion 245 is deformed. For example, one or more slits 416 are formed to face the first deformation portion 402 and/or the second deformation portion 403 of the second bendable portion 245. For example, one or more slits 416 are configured to vary in size while the state of the electronic device 101 (or the housing 200) is changed. For example, one or more slits 416 are configured to increase in size along the connecting portions 414 and 415 that are curved while the electronic device 101 is changed from the first state (e.g., the first state 101a of FIG. 2A) to the second state (e.g., the second state 101b of FIG. 2B). The one or more slits 416 may be configured to decrease in size along the connecting portions 414 and 415 that are unfolded while the electronic device 101 is changed from the second state to the first state.

For example, the first connecting portion 414 of the elastic member 410 includes a first slit 416a for guiding the deformation of the first deformation portion 402 of the second bendable portion 245. For example, the second connecting portion 415 of the elastic member 410 includes a second slit 416b for guiding the deformation of the second deformation portion 403 of the second bendable portion 245. For example, the first slit 416a faces a lateral side 402b of the first deformation portion 402. The second slit 416b faces a lateral side 403b of the second deformation portion 403. However, embodiments supported by the present disclosure are not limited thereto, and the elastic member 410 includes one or more slits 416 to guide and/or provide the deformation of the elastic member 410 while the state of the electronic device 101 is changed.

Referring to FIGS. 5A and 5H, the elastic member 410 includes horizontal portions (or flange portions) 411a, 412a, 413a, 414a, and 415a disposed on the front side of the flexible display 240, and vertical portions (or web portions) 411b, 412b, 413b, 414b, and 415b extending from each of the horizontal portions 411a, 412a, 413a, 414a, and 415a, and disposed on the lateral side of the flexible display 240. The first slit 416a is formed in the fourth vertical portion 414b of the first connecting portion 414. The second slit 416b is formed in the fifth vertical portion 415b of the second connecting portion 415. For example, the elastic member 410 may have a cantilever shape (or a T-beam shape) in the first state (e.g., the first state 101a of FIG. 2A) of the electronic device 101 (or the housing 200), by including the horizontal portions 411a, 412a, 413a, 414a, and 415a, and the vertical portions 411b, 412b, 413b, 414b, and 415b extending perpendicularly to the horizontal portions 411a, 412a, 413a, 414a, and 415a.

For example, referring to FIGS. 5A, 5D, 5E, 5F, 5G, and 5H, the first portion 411 of the elastic member 410 includes the first horizontal portion 411a disposed on the front side 242a of the second unbendable portion 242 and the first vertical portion 411b disposed on a lateral side 242b of the second unbendable portion 242. For example, the second portion 412 of the elastic member 410 includes the second horizontal portion 412a disposed on the front side 243a of the third unbendable portion 243 and the second vertical portion 412b disposed on a lateral side 243b of the third unbendable portion 243. For example, the third portion 413 of the elastic member 410 includes the third horizontal portion 413a disposed on the front side 401a of the plane portion 401 and the third vertical portion 413b disposed on a lateral side 401b of the plane portion 401. For example, the first connecting portion 414 of the elastic member 410 includes the fourth horizontal portion 414a disposed on a front side 402a of the first deformation portion 402 and the fourth vertical portion 414b disposed on the lateral side 402b of the first deformation portion 402. For example, the second connecting portion 415 of the elastic member 410 includes the fifth horizontal portion 415a disposed on a front side 403a of the second deformation portion 403 and the fifth vertical portion 415b disposed on the lateral side 403b of the second deformation portion 403. However, an embodiment supported by the present disclosure is not limited thereto, and the elastic member 410 may include the horizontal portion disposed on the front side of the flexible display 240 and the vertical portion extending from the horizontal portion and disposed on the lateral side of the flexible display 240. The elastic member 410 may reduce the damage to the lateral side of the flexible display 240 by the external impact, by including the vertical portions 411b, 412b, 413b, 414b, and 415b.

For example, one or more slits 416 for guiding the deformation of the elastic member 410 are formed in the fourth vertical portion 414b and/or the fifth vertical portion 415b. For example, the first slit 416a is formed in the fourth vertical portion 414b of the first connecting portion 414. The second slit 416b is formed in the fifth vertical portion 415b of the second connecting portion 415. However, an embodiment is not limited thereto.

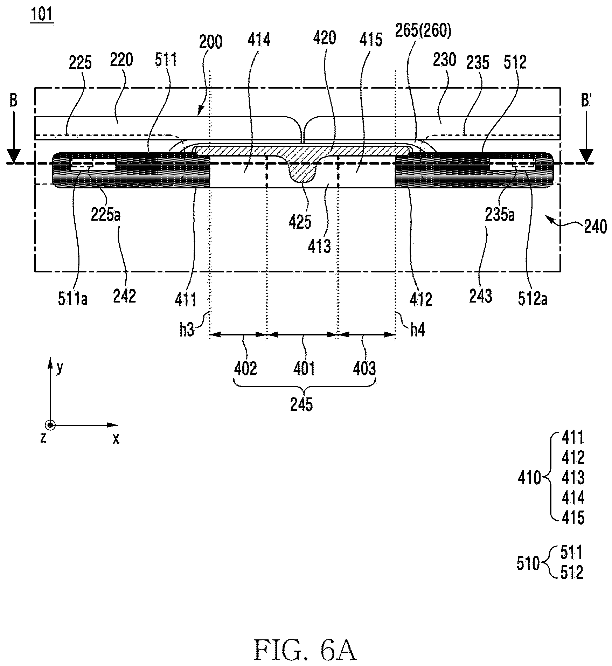

By using at least one rigid member 510 attached to the elastic member 410, the electronic device 101 requires a structure to reduce the damage to the plane portion 401 of the second bendable portion 245, and the first unbendable portion 241 and the second unbendable portion 242, which are adjacent to the second bendable portion 245 and have a flat shape, and to guide the deformation of the second bendable portion 245. The structure will be described through an illustration and a description of FIG. 6A and below.

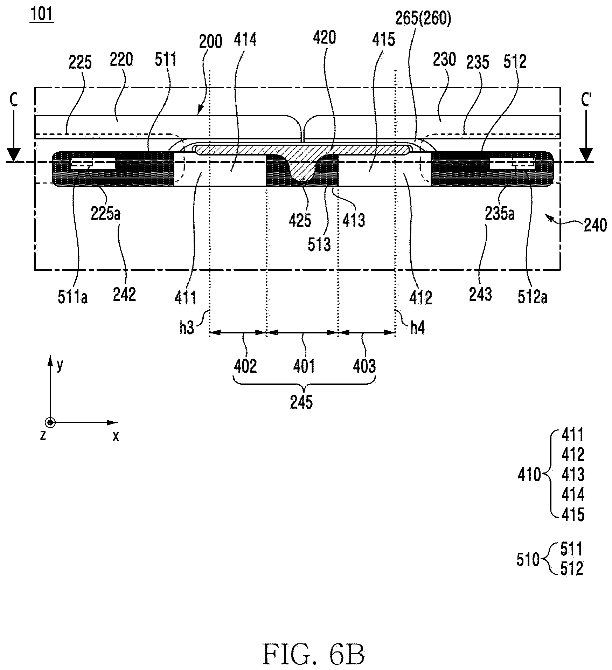

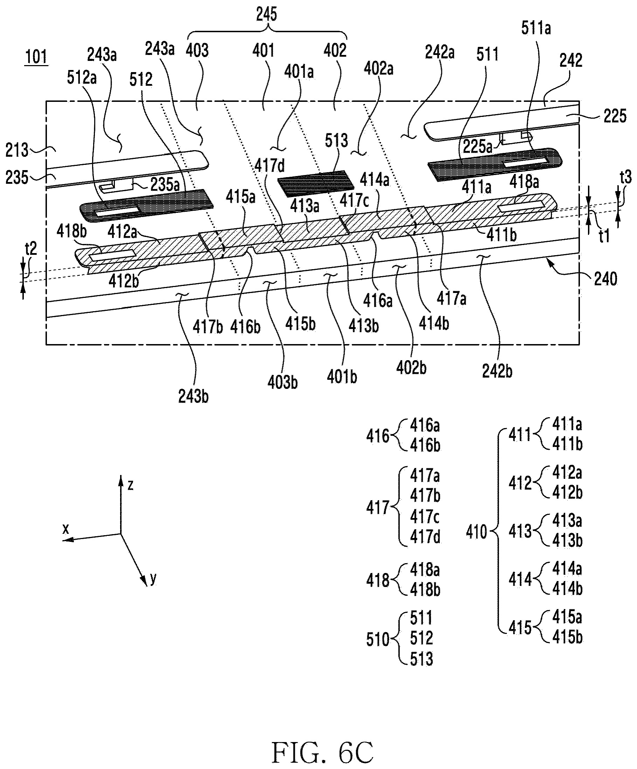

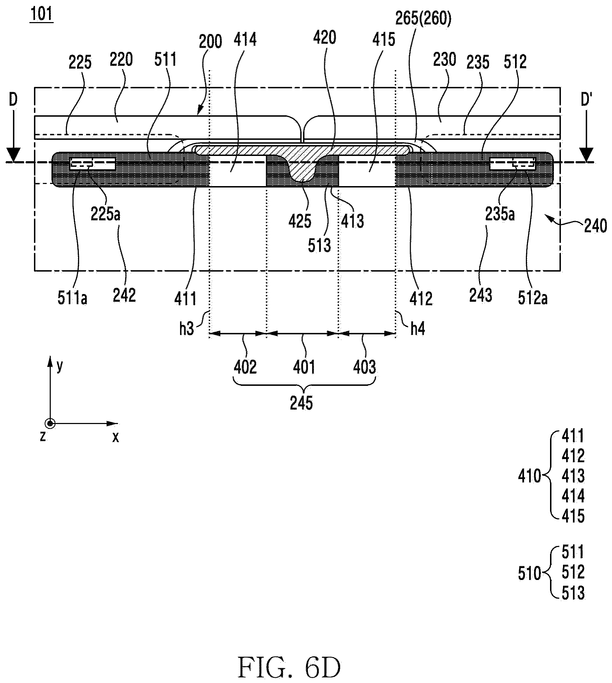

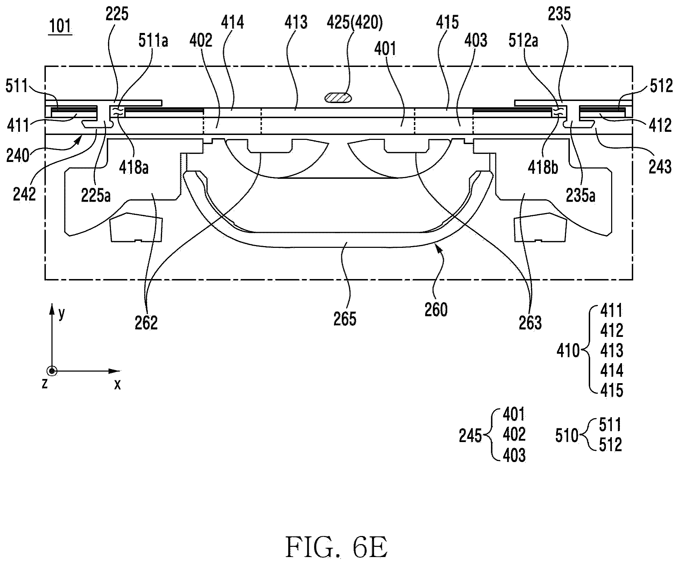

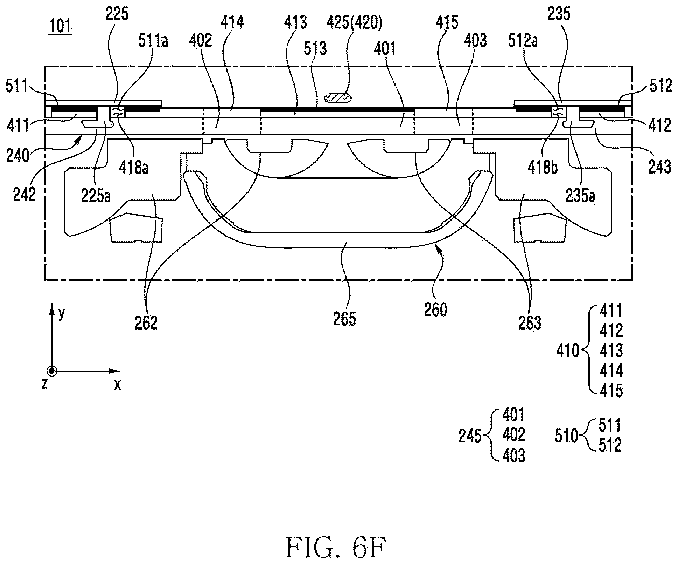

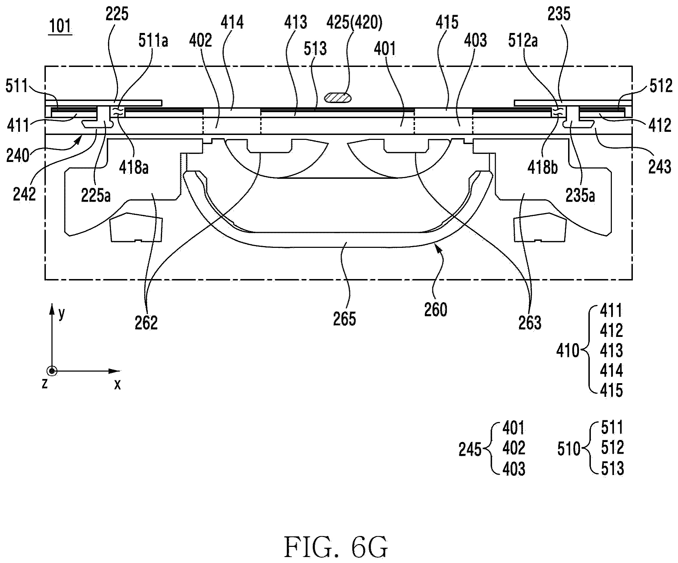

FIG. 6A and 6B illustrate a portion of an electronic device in an exemplary first state. FIG. 6C is a partially exploded perspective view of an electronic device in an exemplary first state. FIG. 6D illustrates a portion of an electronic device in an exemplary first state. FIG. 6E is a partial cross-sectional view of an electronic device in an exemplary first state cut along line B-B' of FIG. 6A. FIG. 6F is a partial cross-sectional view of an electronic device in an exemplary first state cut along line C-C' of FIG. 6B. FIG. 6G is a partial cross-sectional view of an electronic device in an exemplary first state cut along line D-D' of FIG. 6D. FIG. 6H is a partial cross-sectional view of an electronic device in an exemplary first state.

Referring to FIGS. 6A, 6B, 6C, 6D, 6E, 6F, 6G, and 6H, an electronic device 101 includes a housing 200 including a first housing part (e.g., the first housing part 210 of FIG. 2A), a second housing part 220, and a third housing part 230. The electronic device 101 includes a first hinge assembly (e.g., the first hinge assembly 250 of FIG. 2A) rotatably connecting the first housing part 210 and the second housing part 220, and a second hinge assembly 260 rotatably connecting the second housing part 220 and the third housing part 230, having a width (e.g., the width w2 of FIG. 3A) wider than the first hinge assembly 250. The electronic device 101 includes a flexible display 240 including a first unbendable portion (e.g., the first unbendable portion 241 of FIG. 2A) supported by the first housing part 210, a second unbendable portion 242 supported by the second housing part 220, a third unbendable portion 243 supported by the third housing part 230, a first bendable portion (e.g., the first bendable portion 244 of FIG. 2A), at least partially deformable by the first hinge assembly 250, extending from the first unbendable portion 241 to the second unbendable portion 242, and a second bendable portion 245, at least partially deformable by the second hinge assembly 260, extending from the second unbendable portion 242 to the third unbendable portion 243. The electronic device 101 includes an elastic member 410 attached to at least a portion of the second unbendable portion 242, at least a portion of the third unbendable portion 243, and a periphery of the second bendable portion 245. However, it is not limited thereto, and the electronic device 101 illustrated and described in FIGS. 6A to 6E includes configurations (e.g., the other elastic member 430, the other protection member 440, and the engagement structures 225a and 235a) illustrated and described in FIGS. 4A to 5H. Hereinafter, a description of an overlapping configuration having the same reference numeral as that described in FIGS. 4A to 5D will be omitted.

Referring to FIGS. 6A and 6E, unlike illustrated in FIGS. 5A to 5D, at least one rigid member 510 overlaps a first portion 411 and a second portion 412 of the elastic member 410 when the flexible display 240 is viewed from above (e.g., when viewed in a z direction). For example, a first rigid member 511 covers the first portion 411 of the elastic member 410 when the flexible display 240 is viewed from above. When the flexible display 240 is viewed from above, a second rigid member 512 covers the second portion 412 of the elastic member 410. For example, the first rigid member 511 extends to a third boundary axis h3 of the second hinge assembly 260 when the flexible display 240 is viewed from above. By extending to the third boundary axis h3, at least a portion of the first rigid member 511 is at least partially exposed to an outside of the second deco member 225.

For example, the second rigid member 512 extends to a fourth boundary axis h4 of the second hinge assembly 260 when the flexible display 240 is viewed from above. By extending to the fourth boundary axis h4, at least a portion of the second rigid member 512 is at least partially exposed to an outside of the third deco member 235. For example, the first rigid member 511 is at least partially disposed over a third hinge plate 262 of the second hinge assembly 260, by extending to the boundary between the first portion 411 and a first connecting portion 414 of the elastic member 410. For example, the second rigid member 512 is at least partially disposed over a fourth hinge plate 263 of the second hinge assembly 260, by extending to the boundary between the second portion 412 and a second connecting portion 415 of the elastic member 410. However, an embodiment is not limited thereto, and, by extending on the elastic member 410 to a position corresponding to the boundary axes h3 and h4 of the second hinge assembly 260, at least one rigid member 510 guides deformation of the second bendable portion 245 and reduces damage to the second unbendable portion 242 and the third unbendable portion 243 according to the deformation of the second bendable portion 245.

Referring to FIGS. 6B, 6C, and 6F, unlike FIGS. 5A to 5D, at least one rigid member 510 further includes a third rigid member 513 attached on the third portion 413 of the elastic member 410. For example, the third rigid member 513 is at least partially disposed over the second bendable portion 245. For example, the third rigid member 513 is disposed between the first rigid member 511 and the second rigid member 512 in a first state (e.g., the first state 101a of FIG. 2A) of the electronic device 101 (or the housing 200). For example, the third rigid member 513 covers the third portion 413 of the elastic member 410 when the flexible display 240 is viewed from above (e.g., when viewed in the z direction). When the flexible display 240 is viewed from above, the third rigid member 513 extends from the boundary between the third portion 413 and the first connecting portion 414 of the elastic member 410 to the boundary between the third portion 413 and the second connecting portion 415.

For example, like an illustration of FIG. 6C, unlike illustrated in FIG. 5A, the third portion 413 of the elastic member 410 includes a third step structure 417c and a fourth step structure 417d to accommodate the third rigid member 513. The third step structure 417c overlaps the third boundary axis h3 when the flexible display 240 is viewed from above (e.g., when viewed in the z direction). The fourth step structure 417d overlaps the fourth boundary axis h4 when the flexible display 240 is viewed from above. For example, a thickness of each of the rigid members 511, 512, and 513 is substantially the same each other. A height of each of the step structures 417a, 417b, 417c, and 417d of the elastic member 410 for accommodating each of the rigid members 511, 512, and 513 is substantially the same each other. However, an embodiment supported by the present disclosure is not limited thereto.

For example, the third rigid member 513 is at least partially disposed under a protrusion 425 of a protection member 420. Although not illustrated, the third rigid member 513 includes an opening to engage with the protrusion 425. For example, the third rigid member 513 is at least partially interposed between the third portion 413 of the elastic member 410 and the protrusion 425 of the protection member 420.

For example, a length of the third rigid member 513 is smaller than a length of the first rigid member 511 and a length of the second rigid member 512. For example, a length of the first portion 411 and/or a length of the second portion 412 is longer than a length of the third portion 413. The length of the first rigid member 511 attached on the first portion 411 and/or the length of the second rigid member 512 attached on the second portion 412 is longer than the length of the third rigid member 513 attached on the third portion 413. For example, the first rigid member 511 is attached on a first horizontal portion 411a of the first portion 411. The second rigid member 512 is attached on a second horizontal portion 412a of the second portion 412. The third rigid member 513 is attached on a third horizontal portion 413a of the third portion 413. By being attached on the horizontal portions 411a, 412a, and 413a, respectively, the rigid members 511, 512, and 513 are disposed on substantially the same plane in the first state (e.g., the first state 101a of FIG. 2A) of the electronic device 101. However, an embodiment supported by the present disclosure is not limited thereto. By including the third rigid member 513 attached to the third portion 413 of the elastic member 410, at least one rigid member 510 guides the deformation of the second bendable portion 245 and reduces the damage to a plane portion 401 of the second bendable portion 245 according to the deformation of the second bendable portion 245.

Referring to FIGS. 6D and 6G, the electronic device 101 includes all of the structures of at least one rigid member 510 attached on the elastic member 410 illustrated and described in FIGS. 6A, 6B, 6C, 6E, and 6F. For example, when the flexible display 240 is viewed from above, at least one rigid member 510 includes the first rigid member 511 extending to the third boundary axis h3, the second rigid member 512 extending to the fourth boundary axis h4, and the third rigid member 513 covering the plane portion 401 of the second bendable portion 245. For example, when the flexible display 240 is viewed from above, the first rigid member 511 at least partially overlaps the third hinge plate 262 of the second hinge assembly 260. When the flexible display 240 is viewed from above, the second rigid member 512 at least partially overlaps the fourth hinge plate 263 of the second hinge assembly 260. When the flexible display 240 is viewed from above, the third rigid member 513 overlaps a second hinge cover 265 of the second hinge assembly 260. However, an embodiment supported by the present disclosure is not limited thereto. By including at least one rigid member 510 disposed along the periphery of the plane portion 401 of the second bendable portion 245 and the periphery of areas 241 and 242 around the second bendable portion 245, the electronic device 101 protects plane areas (e.g., the areas 400A and 400B of FIG. 4D) around the second bendable portion 245 from an external impact and guides the deformation of the second bendable portion 245 while the state of the electronic device 101 (or the housing 200) is changed.

Referring to FIG. 6H, unlike illustrated and described in FIGS. 6A to 6G, at least one rigid member 510 is disposed between the elastic member 410 and the flexible display 240. For example, at least one rigid member 510 is covered by the elastic member 410. For example, the at least one rigid member 510 includes the first rigid member 511 disposed between the first portion 411 of the elastic member 410 and the second unbendable portion 242. The at least one rigid member 510 includes the second rigid member 512 disposed between the second portion 412 of the elastic member 410 and the third unbendable portion 243. The at least one rigid member 510 includes the third rigid member 513 disposed between the third portion 413 of the elastic member 410 and the plane portion 401. However, an embodiment is not limited thereto.

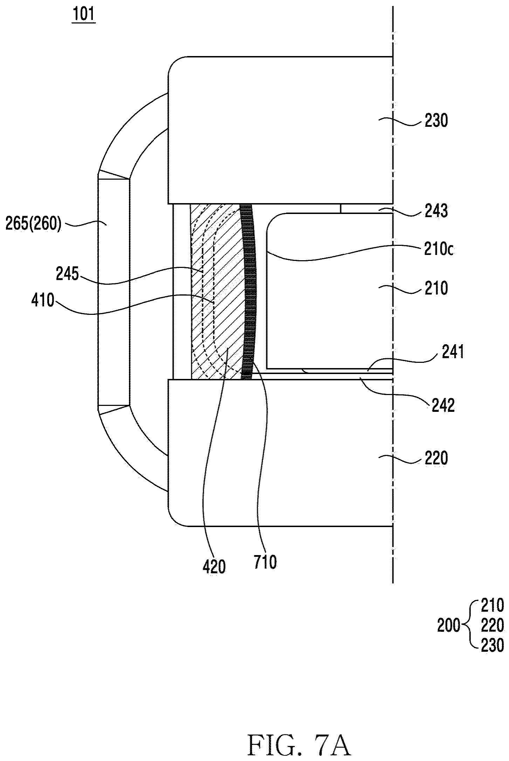

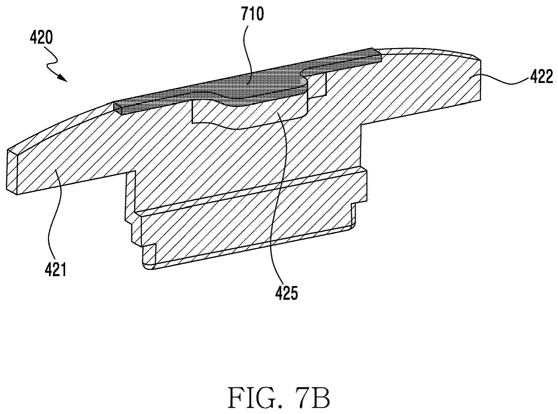

FIG. 7A illustrates a portion of an electronic device in an exemplary second state. FIG. 7B illustrates a protection member of an exemplary electronic device.

Referring to FIGS. 7A and 7B, an electronic device 101 includes a housing 200 including a first housing part 210, a second housing part 220, and a third housing part 230. The electronic device 101 includes a first hinge assembly (e.g., the first hinge assembly 250 of FIG. 2A) rotatably connecting the first housing part 210 and the second housing part 220, and a second hinge assembly 260 rotatably connecting the second housing part 220 and the third housing part 230, having a width (e.g., the width w2 of FIG. 3A) wider than the first hinge assembly 250. The electronic device 101 includes a flexible display (e.g., the flexible display 240 of FIG. 2A) including a first unbendable portion 241 supported by the first housing part 210, a second unbendable portion 242 supported by the second housing part 220, a third unbendable portion 243 supported by the third housing part 230, a first bendable portion (e.g., the first bendable portion 244 of FIG. 2A), at least partially deformable by the first hinge assembly 250, extending from the first unbendable portion 241 to the second unbendable portion 242, and a second bendable portion 245, at least partially deformable by the second hinge assembly 260, extending from the second unbendable portion 242 to the third unbendable portion 243. The electronic device 101 includes an elastic member 410 disposed on at least a portion of the second unbendable portion 242, at least a portion of the third unbendable portion 243, and a periphery of the second bendable portion 245. However, it is not limited thereto, and the electronic device 101 illustrated and described in FIGS. 7A and 7B may include configurations (e.g., the other elastic member 430, the other protection member 440, and the at least one rigid member 510) illustrated and described in FIGS. 4A to 6F. Hereinafter, a description of overlapping configuration having the same reference numeral as that described in FIGS. 4A to 6H will be omitted.

The electronic device 101 includes a protection member 420 coupled to a second hinge cover 265 of the second hinge assembly 260, including a protrusion 425 at least partially positioned over the second bendable portion 245. The protection member 420 includes an elastic portion 710, which is deformable, facing the first housing part 210 in a second state (e.g., the second state 101b of FIG. 2B) of the housing 200. For example, the elastic portion 710 forms at least a portion of the protrusion 425 of the protection member 420. The elastic portion 710 forms at least a portion of a surface of the protection member 420 facing a lateral side 210c of the first housing part 210 in the second state (e.g., the second state 101b of FIG. 2A) that may be referred to as a multi-folded state of the electronic device 101 (or the housing 200). For example, the elastic portion 710 is the portion closest to the lateral side 210c of the first housing part 210 of the protection member 420 in the second state of the electronic device 101.

For example, the protection member 420 includes a first engagement portion 421 coupled to the second housing part 220 and a second engagement portion 422 coupled to the third housing part 230. The first engagement portion 421 is covered by the second housing part 220, by being disposed in the second housing part 220. The second engagement portion 422 may be covered by the third housing part 230, by being disposed in the third housing part 230. By being formed between the first engagement portion 421 and the second engagement portion 422, the elastic portion 710 of the protection member 420 is at least partially exposed to an outside of the electronic device 101, while the state of the electronic device 101 (or the housing 200) is changed. For example, the elastic portion 710 is configured to contact with the lateral side 210c of the first housing part 210 in the second state of the electronic device 101. For example, the elastic portion 710 includes rubber and/or a sponge, but is not limited thereto. By including the elastic portion 710, the protection member 420 may reduce damage to the first housing part 210 due to friction between the protection member 420 and the first housing part 210 while the state of the electronic device 101 is changed.

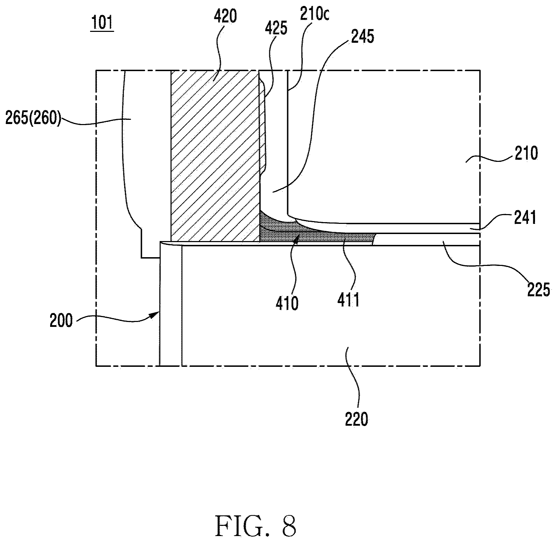

FIG. 8 illustrates a portion of an electronic device in an exemplary second state.

Referring to FIG. 8, an electronic device 101 includes a housing 200 including a first housing part 210, a second housing part (e.g., the second housing part 220 of FIG. 2A), and a third housing part 230. The electronic device 101 includes a first hinge assembly (e.g., the first hinge assembly 250 of FIG. 2A) rotatably connecting the first housing part 210 and the second housing part 220, and a second hinge assembly 260 rotatably connecting the second housing part 220 and the third housing part 230, having a width (e.g., the width w2 of FIG. 3A) wider than the first hinge assembly 250. The electronic device 101 includes a flexible display (e.g., the flexible display 240 of FIG. 2A) including a first unbendable portion (e.g., the first unbendable portion 241 of FIG. 2A) supported by the first housing part 210, a second unbendable portion (e.g., the second unbendable portion 242 of FIG. 2A) supported by the second housing part 220, a third unbendable portion (e.g., the third unbendable portion 243 of FIG. 2A) supported by the third housing part 230, a first bendable portion (e.g., the first bendable portion 244 of FIG. 2A), at least partially deformable by the first hinge assembly 250, extending from the first unbendable portion 241 to the second unbendable portion 242, and a second bendable portion 245, at least partially deformable by the second hinge assembly 260, extending from the second unbendable portion 242 to the third unbendable portion 243. The electronic device 101 includes an elastic member 410 disposed on at least a portion of the second unbendable portion 242, at least a portion of the third unbendable portion 243, and a periphery of the second bendable portion 245. However, it is not limited thereto, and the electronic device 101 illustrated and described in FIGS. 7A and 7B may include configurations (e.g., the other elastic member 430, the other protection member 440, the at least one rigid member 510, and the elastic portion 710) illustrated and described in FIGS. 4A to 7B. Hereinafter, a description of overlapping configuration having the same reference numeral as that described in FIGS. 4A to 7B will be omitted.

The elastic member 410, in a second state (e.g., the second state 101b of FIG. 2B) of the housing 200, is configured to space the first housing part 210 apart from the second bendable portion 245 by at least partially being exposed to an outside of the electronic device 101 to contact with the first housing part 210. For example, at least a portion of the elastic member 410 is configured to be exposed to the outside of the electronic device 101 through a gap between the housing 200 and the flexible display 240. For example, a first portion 411 of the elastic member 410 is partially exposed to an outside of a second deco member 225 by being disposed along a first deformation portion (e.g., the first deformation portion 402 of FIG. 4D) of the second bendable portion 245. For example, a second portion (e.g., the second portion 412 of FIG. 4A) of the elastic member 410 is partially exposed to an outside of a third deco member (e.g., the third deco member 235 of FIG. 4A), by being disposed along a second deformation portion (e.g., the second deformation portion 403 of FIG. 4D) of the second bendable portion 245.

For example, the first portion 411 of the elastic member 410, in the second state (e.g., the second state 101b of FIG. 2B) of the electronic device 101(or the housing 200), is configured to space the first housing part 210 and/or the first unbendable portion 241 apart from the second bendable portion 245, by contacting with the first housing part 210 and/or the first unbendable portion 241. For example, although not illustrated, the second portion 412 of the elastic member 410, in the second state of the electronic device 101, is configured to space the first housing part 210 apart from the second bendable portion 245, by contacting with the first housing part 210. However, an embodiment is not limited thereto, and for example, by being configured to contact with the first housing part 210 and/or the first unbendable portion 241 while the state of the electronic device 101 is changed from a first state (e.g., the first state 101a of FIG. 2A) to the second state (e.g., the second state 101b of FIG. 2B), the elastic member 410 mitigates an impact transmitted from the first housing part 210 to the second bendable portion 245. The elastic member 410 reduces damage to the second bendable portion 245 due to the first housing part 210 by at least partially being exposed to the outside of the electronic device 101.

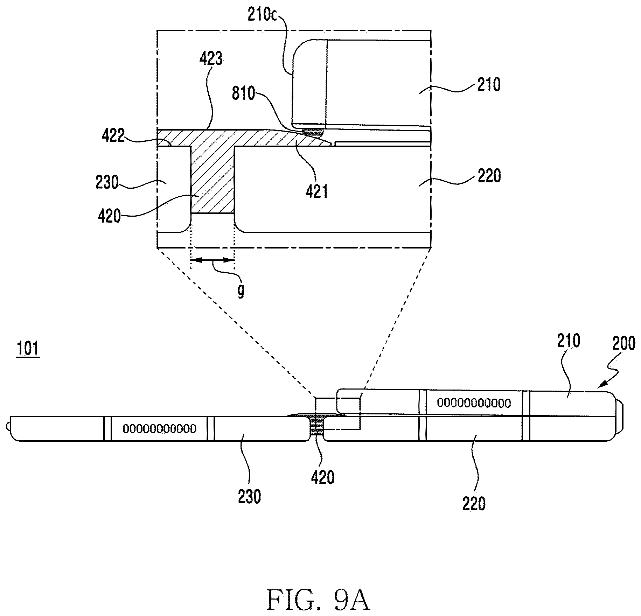

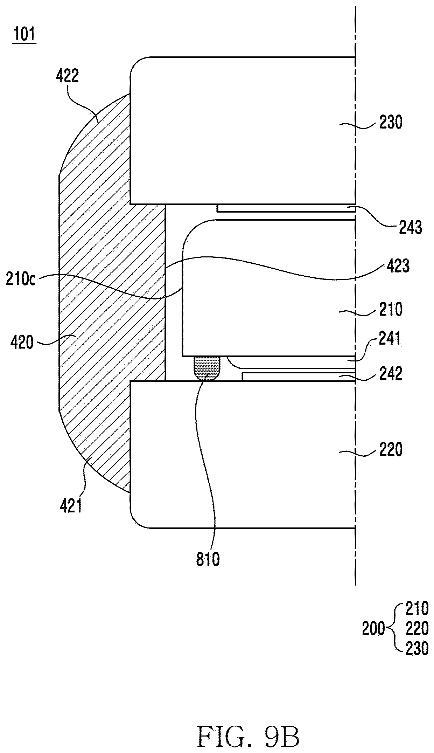

FIG. 9A is a side view of an electronic device in an exemplary third state. FIG. 9B illustrates a portion of an electronic device in an exemplary second state.

Referring to FIGS. 9A and 9B, an electronic device 101 includes a housing 200 including a first housing part 210, a second housing part 220, and a third housing part 230. The electronic device 101 may include a first hinge assembly (e.g., the first hinge assembly 250 of FIG. 2A) rotatably connecting the first housing part 210 and the second housing part 220, and a second hinge assembly 260 (e.g., the second hinge assembly 260 of FIG. 2A) rotatably connecting the second housing part 220 and the third housing part 230, having a width (e.g., the width w2 of FIG. 3A) wider than the first hinge assembly 250. The electronic device 101 includes a flexible display (e.g., the flexible display 240 of FIG. 2A) including a first unbendable portion 241 supported by the first housing part 210, a second unbendable portion 242 supported by the second housing part 220, a third unbendable portion 243 supported by the third housing part 230, a first bendable portion (e.g., the first bendable portion 244 of FIG. 2A), at least partially deformable by the first hinge assembly 250, extending from the first unbendable portion 241 to the second unbendable portion 242, and a second bendable portion (e.g., the second bendable portion 245 of FIG. 2A), at least partially deformable by the second hinge assembly 260, extending from the second unbendable portion 242 to the third unbendable portion 243. The electronic device 101 includes an elastic member (e.g., the elastic member 410 of FIG. 4A) disposed on at least a portion of the second unbendable portion 242, at least a portion of the third unbendable portion 243, and a periphery of the second bendable portion 245. However, it is not limited thereto, and the electronic device 101 illustrated and described in FIGS. 9A and 9B may include configurations (e.g., the other elastic member 430, the other protection member 440, the at least one rigid member 510, and the elastic portion 710) illustrated and described in FIGS. 4A to 8. Hereinafter, a description of overlapping configuration having the same reference numeral as that described in FIGS. 4A to 8 will be omitted.

As illustrated in FIG. 9A, the third state of the electronic device 101 or the housing 200 is a state in which the first housing part 210 is folded with respect to the second housing part 220, and the third housing part 230 is unfolded with respect to the second housing part 220. For example, the third state is a state in which the first unbendable portion 241 of the flexible display 240 faces the second unbendable portion 242, and the second unbendable portion 242 and the third unbendable portion 243 are laid on substantially the same plane. For example, the third state is a state in which the first bendable portion 244 is curved and the second bendable portion 245 is unfolded. The third state is referred to as a single folded state or a half folded state of the electronic device 101 unlike the second state of the electronic device 101 which is referred to as a multi-folded state illustrated in FIG. 9B, in that only the first housing part 210 is folded with respect to the second housing part 220, but is not limited thereto.

The first housing part 210 includes a buffer member 810 configured to contact with the second housing part 220 or the second unbendable portion 242 in the second state of the electronic device 101. By including the buffer member 810, the first housing part 210 reduces damage to the electronic device 101 due to friction between the first unbendable portion 241 and the second unbendable portion 242 (or friction between the first housing part 210 and the second housing part 220) while the state of the electronic device 101 is changed.

The protection member 420 is configured to contact with the buffer member 810. For example, the protection member 420 is includes a guide side 423 for guiding movement of the first housing part 210 through the buffer member 810. The guide side 423 is at least partially formed by a first engagement portion 421 of the protection member 420 slidably coupled to the first housing part 210 and a second engagement portion 422 of the protection member 420 slidably coupled to the second housing part 220.

For example, when referring to FIG. 9A and FIG. 9B sequentially, while changing from the third state to the second state, the guide side 423 is spaced apart from the buffer member 810 along the protection member 420 moving along the third housing part 230 rotated with respect to the second housing part 220. As the guide side 423 is spaced apart from the buffer member 810, the buffer member 810 contacts with the second housing part 220 or the second unbendable portion 242 of the flexible display 240. For example, when referring to FIG. 9B and FIG. 9A sequentially, while changing from the second state to the third state, the guide side 423 contacts with the buffer member 810 along the protection member 420 moving along the third housing part 230 rotated with respect to the second housing part 220. The guide side 423 is configured to form a gap between the first housing part 210 and the second housing part 220 by raising the buffer member 810. While changing from the second state to the third state, the guide side 423 is configured to allow a user of the electronic device 101 to easily unfold the first housing part 210 with respect to the second housing part 220 by raising the first housing part 210 together with the buffer member 810.

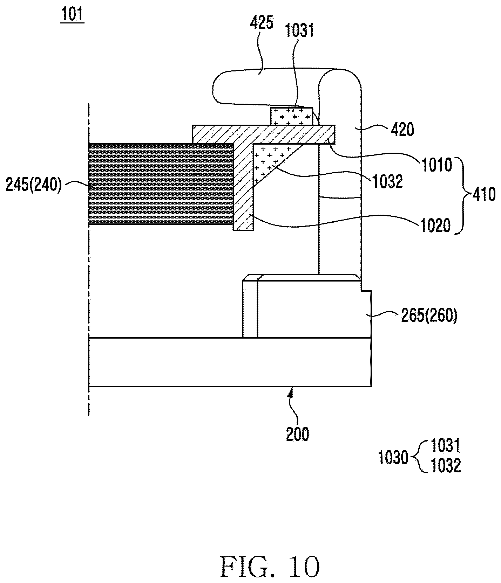

FIG. 10 illustrates a portion of an exemplary electronic device.

Referring to FIG. 10, an electronic device 101 includes a housing 200 including a first housing part (e.g., the first housing part 210 of FIG. 2A), a second housing part (e.g., the second housing part 220 of FIG. 2A), and a third housing part (e.g., the third housing part 230 of FIG. 2A). The electronic device 101 includes a first hinge assembly (e.g., the first hinge assembly 250 of FIG. 2A) rotatably connecting the first housing part 210 and the second housing part 220, and a second hinge assembly 260 rotatably connecting the second housing part 220 and the third housing part 230, having a width (e.g., the width w2 of FIG. 3A) wider than the first hinge assembly 250. The electronic device 101 includes a flexible display 240 including a first unbendable portion (e.g., the first unbendable portion 241 of FIG. 2A) supported by the first housing part 210, a second unbendable portion (e.g., the second unbendable portion 242 of FIG. 2A) supported by the second housing part 220, a third unbendable portion (e.g., the third unbendable part 243 of FIG. 2A) supported by the third housing part 230, a first bendable portion (e.g., the first bendable portion 244 of FIG. 2A), at least partially deformable by the first hinge assembly 250, extending from the first unbendable portion 241 to the second unbendable portion 242, and a second bendable portion 245, at least partially deformable by the second hinge assembly 260, extending from the second unbendable portion 242 to the third unbendable portion 243. The electronic device 101 includes an elastic member 410 disposed on at least a portion of the second unbendable portion 242, at least a portion of the third unbendable portion 243, and a periphery of the second bendable portion 245. However, it is not limited thereto, and the electronic device 101 illustrated and described in FIG. 10 may include configurations (e.g., the other elastic member 430, the other protection member 440, the at least one rigid member 510, and the elastic portion 710) illustrated and described in FIGS. 4A to 9B. Hereinafter, a description of overlapping configuration having the same reference numeral as that described in FIGS. 4A to 9B will be omitted.

The elastic member 410 includes a horizontal portion 1010 disposed on a front side of the flexible display 240 and a vertical portion 1020 disposed on a lateral side of the flexible display 240. The electronic device 101 includes additional elastic portions 1030 disposed on the elastic member 410 to support the elastic member 410. For example, the additional elastic portions 1030 includes a first elastic portion 1031 interposed between a protrusion 425 of a protection member 420 and the horizontal portion 1010, and a second elastic portion 1032 to support the horizontal portion 1010 by being disposed on the horizontal portion 1010 and the vertical portion 1020. For example, the additional elastic portions 1030 are be formed of a different material than the elastic member 410. For example, the additional elastic portions 1030 are integrally formed with the elastic member 410. For example, the additional elastic portions 1030 are attached to the elastic member 410 through adhesive material or double injection, but an embodiment is not limited thereto. By including additional elastic portions 1030 for supporting the elastic member 410, the electronic device 101 reduces damage to the elastic member 410, while a state of the electronic device 101 (or the housing 200) is changed.

As described above, a multi-foldable electronic device (e.g., the electronic device 101 of FIG. 1) may include a foldable housing (e.g., the housing 200 of FIG. 2A) including a first housing (e.g., the first housing part 210 of FIG. 2A), a second housing (e.g., the second housing part 220 of FIG. 2A), and a third housing (e.g., the third housing part 230 of FIG. 2A). The multi-foldable electronic device may include a first hinge assembly (e.g., the first hinge assembly 250 of FIG. 2A) rotatably connecting the first housing and the second housing. The multi-foldable electronic device may include a second hinge assembly (e.g., the second hinge assembly 260 of FIG. 2A) rotatably connecting the second housing and the third housing, having a width (e.g., the w2 of FIG. 3A) wider than the first hinge assembly. The multi-foldable electronic device may include a flexible display (e.g., the flexible display 240 of FIG. 2A) including a first unbendable portion (e.g., the first unbendable portion 241 of FIG. 2A) supported by the first housing, a second unbendable portion (e.g., the second unbendable portion 242 of FIG. 2A) supported by the second housing, a third unbendable portion (e.g., the third unbendable portion 243 of FIG. 2A) supported by the third housing, a first bendable portion (e.g., the first bendable portion 244 of FIG. 2A), at least partially deformable by the first hinge assembly, extending from the first unbendable portion to the second unbendable portion, and a second bendable portion (e.g., the second bendable portion 245 of FIG. 2A), at least partially deformable by the second hinge assembly, extending from the second unbendable portion to the third unbendable portion. The multi-foldable electronic device may include an elastic member (e.g., the elastic member 410 of FIG. 4A) attached to at least a portion of the second unbendable portion, at least a portion of the third unbendable portion, and a periphery of the second bendable portion. The multi-foldable electronic device may include a first rigid member (e.g., the first rigid member 511 of FIG. 5A) attached on a first portion (e.g., the first portion 411 of FIG. 4A) of the elastic member attached to the at least a portion of the second unbendable portion, and a second rigid member (e.g., the second rigid member 512 of FIG. 5A) attached on a second portion (e.g., the second portion 412 of FIG. 4A) of the elastic member attached to the at least a portion of the third unbendable portion.

For example, the second bendable portion, in a multi-folded state (e.g., the second state 101b of FIG. 2B) of the housing, may include a plane portion (e.g., the plane portion 401 of FIG. 4D), substantially perpendicular to the second unbendable portion and the third unbendable portion, having a flat shape. The second bendable portion, in the multi-folded state of the housing, may include a first deformation portion (e.g., the first deformation portion 402 of FIG. 4D), curved by the second hinge assembly, extending from the plane portion to the second unbendable portion, and a second deformation portion (e.g., the second deformation portion 403 of FIG. 4D), curved by the second hinge assembly, extending the plane portion to the third unbendable portion. The elastic member may further include a third portion (e.g., the third portion 413 of FIG. 4A) attached to the plane portion.

For example, a thickness (e.g., the t3 of FIG. 5A) of the third portion of the elastic member may be greater than a thickness (e.g., the t1 of FIG. 5A) of the first portion of the elastic member and a thickness (e.g., the t2 of FIG. 5A) of the second portion of the elastic member.

For example, a thickness of the third portion of the elastic member may be greater than a thickness (e.g., the t4 of FIG. 5A) of the first rigid member and a thickness (e.g., the t5 of FIG. 5A) of the second rigid member.

For example, the multi-foldable electronic device may further include a third rigid member (e.g., the third rigid member 513 of FIG. 6B) disposed on the third portion. A length of the third rigid member may be smaller than a length of the first rigid member and a length of the second rigid member.

For example, the elastic member may include a first connecting portion, connecting the third portion and the first portion, attached to the first deformation portion, including a first slit (e.g., the first slit 416a of FIG. 5A) for guiding deformation of the first deformation portion. The elastic member may further include a second connecting portion, connecting the third portion and the second portion, attached to the second deformation portion, including a second slit (e.g., the second slit 416b of FIG. 5A) for guiding deformation of the second deformation portion.

For example, the first connecting portion may include a first protection portion (e.g., the fourth vertical portion 414b of FIG. 5A), attached to a lateral side of the first deformation portion, on which the first slit is formed. The second connecting portion may include a second protection portion (e.g., the fifth vertical portion 415b of FIG. 5A), attached to a lateral side of the second deformation portion, on which the second slit is formed.

For example, the first hinge assembly may include a first hinge cover (e.g., the first hinge cover 255 of FIG. 4C) configured to be at least partially exposed to an outside of the multi-foldable electronic device. The second hinge assembly may include a second hinge cover (e.g., the second hinge cover 265 of FIG. 4D) configured to be at least partially exposed to the outside of the multi-foldable electronic device. The multi-foldable electronic device may further include a protection member (e.g., the protection member 420 of FIG. 4A) coupled to the second hinge cover, including a protrusion (e.g., the protrusion 425 of FIG. 4A) at least partially positioned over the second bendable portion.

For example, the protection member may further include an elastic portion (e.g., the elastic portion 710 of FIG. 7A), which is deformable, facing the first housing in a multi-folded state of the housing.

For example, the multi-foldable electronic device may further include another elastic member (e.g., the other elastic member 430 of FIG. 4C) attached to at least a portion of the first unbendable portion, at least another portion of the second unbendable portion, and a periphery of the first bendable portion. A length (e.g., the 11 of FIG. 4E) of the other elastic member may be smaller than a length (e.g., the 12 of FIG. 4F) of the elastic member.

For example, the multi-foldable electronic device may further include another protection member (e.g., the other protection member 440 of FIG. 4C), coupled to the first hinge cover, including another protrusion (e.g., the other protrusion 445 of FIG. 4C) at least partially positioned over the first bendable portion. A width (e.g., the d1 of FIG. 4E) of the other protrusion may be smaller than a width (e.g., the d2 of FIG. 4F) of the protrusion.

For example, at least one of the first rigid member and the second rigid member may be attached to the elastic member through adhesive material, or double injection.

For example, the elastic member, in a multi-folded state of the housing, may be configured to space the first housing apart from the second bendable portion by at least partially being exposed to an outside of the multi-foldable electronic device to contact with the first housing.

For example, the first rigid member may include a first opening (e.g., the first opening 511a of FIG. 5A) elongated along a periphery of the second unbendable portion. The second rigid member may include a second opening (e.g., the second opening 512a of FIG. 5A) elongated along a periphery of the third unbendable portion. The housing may further include a first deco member (e.g., the second deco member 225 of FIG. 4A) coupled to the first opening, covering the periphery of the second unbendable portion together with the elastic member, and a second deco member (e.g., the third deco member 235 of FIG. 4A) coupled to the second opening, covering the periphery of the third unbendable portion together with the elastic member.

For example, the elastic member may have a cantilever shape.

As described above, a multi-foldable electronic device may include a foldable housing including a first housing, a second housing, and a third housing. The multi-foldable electronic device may include a first hinge assembly rotatably connecting the first housing and the second housing. The multi-foldable electronic device may include a second hinge assembly rotatably connecting the second housing and the third housing, having a width wider than the first hinge assembly. The multi-foldable electronic device may include a flexible display including a first unbendable portion supported by the first housing, a second unbendable portion supported by the second housing, a third unbendable portion supported by the third housing, a first bendable portion, at least partially deformable by the first hinge assembly, extending from the first unbendable portion to the second unbendable portion, and a second bendable portion, at least partially deformable by the second hinge assembly, extending from the second unbendable portion to the third unbendable portion. The multi-foldable electronic device may include a first elastic member (e.g., the other elastic member 430 of FIG. 4C) attached to the first unbendable portion, the second unbendable portion, and a periphery of the first bendable portion. The multi-foldable electronic device may include a second elastic member (e.g., the elastic member 410 of FIG. 4A) attached to the second unbendable portion, the third unbendable portion, and a periphery of the second bendable portion, having a length (e.g., the 12 of FIG. 4F) longer than the first elastic member. The multi-foldable electronic device may include a first protection member (e.g., the other protection member 440 of FIG. 4C), coupled to the first hinge assembly, including a first protrusion (e.g., the other protrusion 445 of FIG. 4C) positioned at least partially over the first elastic member. The multi-foldable electronic device may include a second protection member (e.g., the protection member 420 of FIG. 4A), coupled to the second hinge assembly, including a second protrusion (e.g., the protrusion 425 of FIG. 4A) positioned at least partially over the second elastic member and having a width (e.g., the d2 of FIG. 4F) greater than the first protrusion.

For example, the second elastic member may include a first portion attached to the second unbendable portion, a second portion attached to the third unbendable portion, and a third portion attached to the second bendable portion. The multi-foldable electronic device may further include at least one rigid member attached on at least one of the first portion and the second portion.

For example, the second bendable portion, in a multi-folded state of the housing, may include a plane portion, to which the third portion of the elastic member is attached, substantially perpendicular to the second unbendable portion and the third unbendable portion, having a flat shape. The second bendable portion may include a first deformation portion, curved by the second hinge assembly, extending from the plane portion to the second unbendable portion, and a second deformation portion, curved by the second hinge assembly, extending from the plane portion to the third unbendable portion. The second protrusion of the second protection member may be positioned over the plane portion of the second bendable portion.

For example, the second protection member may further include an elastic portion, which is deformable, facing the first housing in a multi-folded state of the housing.

For example, the elastic member, in a multi-folded state of the housing, may be configured to space the first housing apart from the second bendable portion by at least partially being exposed to an outside of the multi-foldable electronic device to contact with the first housing.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A multi-foldable electronic device comprising:
a housing including a first housing, a second housing , and a third housing;
a first hinge assembly rotatably connecting the first housing and the second housing;
a second hinge assembly , rotatably connecting the second housing and the third housing, having a width wider than the first hinge assembly;
a flexible display including:
a first portion supported by the first housing,
a second portion supported by the second housing, and
a third portion supported by the third housing; and
a cover disposed on a portion of the flexible display, to prevent inflow of foreign substance from an outside, and
wherein the cover includes:
an elastic member ; and
a rigid member, coupled to a portion of the elastic member.

2. The multi-foldable electronic device of claim 1,
wherein the flexible display includes a first foldable portion between the first portion and the second portion and a second foldable portion between the second portion and the third portion,
wherein the rigid member includes:
a first rigid member disposed on a first elastic portion of the elastic member corresponding to the second portion; and
a second rigid member disposed on a second elastic portion of the elastic member corresponding to the third portion,
wherein the second foldable portion, in a multi-folded state of the housing, includes:
a flat area, substantially perpendicular to the second portion and the third portion, having a substantially flat shape;
a first curved area, curved by the second hinge assembly, extending from the flat area to the second portion; and
a second curved area, curved by the second hinge assembly, extending from the flat area to the third portion, and
wherein the elastic member includes a third elastic portion disposed on the flat area.

3. The multi-foldable electronic device of claim 2,
wherein the first foldable portion is at least partially deformable by the first hinge assembly and extends from the first portion to the second portion,
wherein the second foldable portion is at least partially deformable by the second hinge assembly and extends from the second portion to the third portion, and
wherein a thickness of the third elastic portion of the elastic member is greater than a thickness of the first elastic portion of the elastic member and a thickness of the second elastic portion of the elastic member.

4. The multi-foldable electronic device of claim 2 or claim 3,
wherein a thickness of the third elastic portion of the elastic member is greater than a thickness of the first rigid member and a thickness of the second rigid member.

5. The multi-foldable electronic device of any one of claims 2 to 4,
wherein the rigid member further includes a third rigid member disposed on the third elastic portion of the elastic member, and
wherein a length of the third rigid member is smaller than a length of the first rigid member and a length of the second rigid member.

6. The multi-foldable electronic device of any one of claims 2 to 5,
wherein the elastic member includes:
a first connecting portion, connecting the third elastic portion and the first elastic portion, attached to the first curved area, including a first slit for guiding deformation of the first curved area; and
a second connecting portion, connecting the third elastic portion and the second elastic portion, attached to the second curved area, including a second slit for guiding deformation of the second curved area.

7. The multi-foldable electronic device of claim 6,
wherein the first connecting portion includes a first protection portion, attached to a lateral side of the first curved area, on which the first slit is formed, and
wherein the second connecting portion includes a second protection portion, attached to a lateral side of the second curved area, on which the second slit is formed.

8. The multi-foldable electronic device of any one of claims 1 to 7, further comprising:
a first hinge cover at least partially covering the first hinge assembly;
a second hinge cover at least partially covering the second hinge assembly; and
a protection member, coupled to the second hinge cover, including a protrusion at least partially positioned over the second foldable portion.

9. The multi-foldable electronic device of claim 8,
wherein the protection member further includes an elastic portion, which is deformable, facing a lateral side of the first housing in a multi-folded state of the housing.

10. The multi-foldable electronic device of claim 8 further comprising:
another elastic member disposed on the first portion, the second portion, and the first foldable portion, and
wherein a length of the other elastic member is smaller than a length of the elastic member.

11. The multi-foldable electronic device of claim 10 further comprising:
another protection member, coupled to the first hinge cover, including another protrusion at least partially positioned over the first foldable portion, and
wherein a width of the other protrusion is smaller than a width of the protrusion.

12. The multi-foldable electronic device of any one of claims 1 to 11,
wherein the rigid member is attached to the elastic member through adhesive material, insert molding, or double injection.

13. The multi-foldable electronic device of any one of claims 1 to 12,
wherein the elastic member, in a multi-folded state of the housing, is configured to space the first housing apart from the second foldable portion by being at least partially exposed to an outside of the multi-foldable electronic device to contact with the first housing.

14. The multi-foldable electronic device of any one of claims 1 to 13,
wherein the rigid member includes:
a first rigid member including a first opening elongated along a periphery of the second portion, and
a second rigid member including a second opening elongated along a periphery of the third portion, and
wherein the housing further includes:
a first deco member, including a first engagement structure coupled to the first opening, covering the periphery of the second portion together with the elastic member; and
a second deco member, including a second engagement structure coupled to the second opening, covering the periphery of the third portion together with the elastic member.

15. The multi-foldable electronic device of any one of claims 1 to 14,
wherein the elastic member is cantilevered.
